(19) Europäisches Patentamt
European Patent Office
Office européen des brevets

(11) **EP 4 678 771 A1**

(12) **EUROPEAN PATENT APPLICATION**
published in accordance with Art. 153(4) EPC

(43) Date of publication:
**14.01.2026 Bulletin 2026/03**

(21) Application number: **23935414.5**

(22) Date of filing: **28.04.2023**

(51) International Patent Classification (IPC):
*C21D 9/46* (2006.01)        *C21D 9/56* (2006.01)
*C22C 38/00* (2006.01)       *C22C 38/06* (2006.01)
*C22C 38/60* (2006.01)       *C23C 2/02* (2006.01)
*C23C 2/06* (2006.01)        *C23C 2/28* (2006.01)

(52) Cooperative Patent Classification (CPC):
**C21D 9/46; C21D 9/56; C22C 38/00; C22C 38/06;
C22C 38/60; C23C 2/02; C23C 2/06; C23C 2/28**

(86) International application number:
**PCT/JP2023/016964**

(87) International publication number:
**WO 2024/224639 (31.10.2024 Gazette 2024/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: JFE Steel Corporation
**Tokyo 100-0011 (JP)**

(72) Inventors:
• **TERASHIMA, Shotaro**
  **Tokyo 100-0011 (JP)**
• **NAKAGAITO, Tatsuya**
  **Tokyo 100-0011 (JP)**
• **KAWASAKI, Yoshiyasu**
  **Tokyo 100-0011 (JP)**
• **HOSHINO, Katsuya**
  **Tokyo 100-0011 (JP)**

(74) Representative: **Haseltine Lake Kempner LLP
One Portwall Square
Portwall Lane
Bristol BS1 6BH (GB)**

(54) **METHOD FOR PRODUCING PLATED STEEL SHEET**

(57)    In a process prior to a coating or plating treatment process, a blank sheet is subjected to a heat treatment in which the atmosphere and heat pattern are appropriately controlled.

EP 4 678 771 A1

**Description**

TECHNICAL FIELD

The present disclosure relates to a method of producing a coated or plated steel sheet.

BACKGROUND

In recent years, from the perspective of global environment protection, there has been a strong demand for improved fuel efficiency to decrease $CO_2$ emissions from automobiles. Accordingly, there has been a growing trend to decrease the weight of automotive bodies by sheet metal thinning of automotive body parts. This has led to a growing need for higher strength steel sheets that are used as material for automotive body parts.

In order to increase the strength of steel sheets, it is effective to add elements having a solid solution strengthening ability, such as Si and Mn.

Further, coated or plated steel sheets are often used as the material for automotive body parts. Here, a coated or plated steel sheet, for example, a hot-dip galvanized steel sheet, is typically produced by annealing a base steel sheet in an annealing furnace of a continuous hot-dip galvanizing line (hereinafter also referred to as CGL) and then carrying out a hot-dip galvanizing treatment.

As a method of producing such a coated or plated steel sheet, for example, Patent Literature (PTL) 1 describes:

"A method of producing a high-strength hot-dip galvanized steel sheet, the method comprising: subjecting a steel sheet containing, in mass%, C: 0.3 % or less, Si: 0.1 % to 2.5 %, Mn: 0.5 % to 3.0 %, with the balance being Fe and inevitable impurity, to an oxidation treatment, then reduction annealing, and then a hot-dip coating treatment, wherein, in the oxidation treatment, in a first stage, heating is carried out at a temperature of 400 °C to 750 °C in an atmosphere having an $O_2$ concentration of 1000 volume ppm or more and an $H_2O$ concentration of 1000 volume ppm or more, and in a second stage, heating is carried out at a temperature of 600 °C to 850 °C in an atmosphere having an $O_2$ concentration of less than 1000 volume ppm and an $H_2O$ concentration of 1000 volume ppm or more, and, in the reduction annealing, heating is carried out at a temperature of 650 °C to 900 °C in an atmosphere having an $H_2$ concentration of 5 vol% to 30 vol%, and an $H_2O$ concentration of 500 volume ppm to 5000 volume ppm, with the balance being $N_2$ and inevitable impurity."

PTL 2 describes:

"A method of producing a galvanized steel sheet, the method comprising pickling and heating a hot-rolled steel sheet, then applying a reduction treatment to the steel sheet surface, and coating by immersing the steel sheet in molten zinc, wherein a process of promoting dehydrogenation by setting the steel sheet temperature at 450 °C to 550 °C in an atmosphere of $H_2$: 8 % to 20 % and $N_2$: 92 % to 80 % is inserted between the reduction treatment and the coating."

PTL 3 describes:

"A method of producing a hot-dip galvanized steel sheet without coating blistering, the method comprising pickling a hot-rolled steel sheet that has a thickness of 1.5 mm or more, then annealing in a continuous hot-dip galvanizing line, and then coating in a hot-dip galvanizing bath without alloying treatment, wherein, when hydrogen concentration, in %, in the atmosphere inside the annealing furnace is H and annealing temperature, in °C, is RT, these are controlled so as to satisfy the following expressions (1) and (2),

$$650 \leq RT \leq 950 \qquad \ldots(1)$$

$$1 \leq H \leq -0.05 \times RT + 57.5 \qquad \ldots(2)."$$

PTL 4 describes:

"A method of producing a hot-dip galvanized steel sheet, the method comprising: continuously applying a hot-dip galvanizing treatment to a steel sheet having a chemical composition containing, in mass%, at least Si: 0.2 % to 2.0 %, Mn: 0.2 % to 3.0 %, and Al: 0.001 % to 1.5 %, with the ratios of Si, Mn, and Al satisfying the following expressions (1), (2), and (3), in a hot-dip galvanizing line comprising a radiant tube reducing furnace, wherein, during heating of the steel sheet in the reducing furnace,

a logarithmic ratio of hydrogen partial pressure to water vapor partial pressure of atmospheric gas in a temperature range from 650 °C to less than 750 °C satisfies the following expression (4), and
a logarithmic ratio of the hydrogen partial pressure to the water vapor partial pressure of the atmospheric gas in a temperature range from 750 °C to 950 °C satisfies the following expression (5),

$$5 \leq (Si/(Si + Mn + Al)) \times 100 \leq 54 \qquad ...(1)$$

$$30 \leq (Mn/(Si + Mn + Al)) \times 100 \leq 95 \qquad ...(2)$$

$$0 \leq (Al/(Si + Mn + Al)) \times 100 \leq 30 \qquad ...(3)$$

$$\log(PH_2O/PH_2) \leq -1.55 \qquad ...(4)$$

$$-0.91 \leq \log(PH_2O/PH_2) \leq -0.635 \qquad ...(5)."$$

Further, PTL 5 describes:

"A method of producing a high-strength galvanized steel sheet, the method comprising: an annealing process of heating a cold-rolled steel sheet having a defined chemical composition in an annealing furnace atmosphere having a hydrogen concentration of 1 vol% or more and 13 vol% or less in a temperature range from annealing furnace temperature T1: ($A_{c3}$ point - 10 °C) to 900 °C for 5 s or longer, then cooling, then and holding in a temperature range from 400 °C to 550 °C for 20 s to 1500 s;
a coating or plating process of coating or plating the steel sheet after the annealing process and cooling the steel sheet to 100 °C or less at an average cooling rate of 3 °C/s or more; and
a post-heat-treatment process of holding the coated or plated steel sheet after the coating or plating process in a furnace atmosphere having a hydrogen concentration of 10 vol% or less and a dew point of 50 °C or less at a temperature T2 (°C) of 70 °C or more and 450 °C or less for a time t (hr) of 0.02 (hr) or more that satisfies the following expression (2),

$$135 - 17.2 \times \ln(t) \leq T2 \qquad ...(2)."$$

CITATION LIST

Patent Literature

PTL 1: JP 2016-053211 A
PTL 2: JP S54-130443 A
PTL 3: JP 3266008 B2
PTL 4: JP 5811841 B2
PTL 5: JP 2020-045568 A

SUMMARY

(Technical Problem)

Si and Mn are easily oxidizable elements that are more easily oxidized than Fe. When a coated or plated steel sheet, for example a hot-dip galvanized steel sheet, is produced using a steel sheet having a chemical composition containing a large amount of such easily oxidizable elements as a blank sheet, the easily oxidizable elements contained in the blank sheet are oxidized during annealing and concentrated at the blank sheet surface, forming oxides at the blank sheet surface. These oxides decrease the wettability of the blank sheet to molten zinc, which can cause deterioration of appearance such as bare spots and degradation of coating adhesion. Hereinafter, the term "coatability" is used to refer to both coating or plating appearance and coating or plating adhesion.

Further, steel sheets used as material for automotive body parts are required to have excellent hydrogen embrittlement resistance.

However, in the methods of producing coated or plated steel sheets described in PTL 1 to 5, when a steel sheet having a chemical composition containing large amounts of Si and Mn, which are easily oxidizable elements, is used as a blank sheet, none of the methods can be said to be able to achieve both excellent coatability and excellent hydrogen embrittlement resistance, and this point remains a problem.

That is, when a steel sheet having a chemical composition containing large amounts of Si and Mn is used as a blank sheet, it cannot be said that a method of producing a coated or plated steel sheet that achieves both excellent coatability and excellent hydrogen embrittlement resistance has been developed, and the development of such a method is currently desired.

In view of the current situation, it would be helpful to provide a method of producing a coated or plated steel sheet that makes it possible to produce a coated or plated steel sheet that has both excellent coatability and excellent hydrogen embrittlement resistance, even in a case where a steel sheet having a chemical composition containing large amounts of Si and Mn is used as a blank sheet.

(Solution to Problem)

The inventors conducted intensive studies to solve the technical problem outlined above. As a result, the inventors discovered a solution is achievable by subjecting a blank sheet to a heat treatment in which the atmosphere and heat pattern are appropriately controlled in a process prior to the coating or plating treatment process.

The present disclosure is based on this discovery and further studies.

Primary features of the present disclosure are as follows.

1. A method of producing a coated or plated steel sheet, the method comprising:

an oxidizing process of heating a blank sheet having a chemical composition containing, in mass%, Si: 0.10 % or more and 2.00 % or less, and Mn: 1.00 % or more and 5.00 % or less, under the following conditions:

atmosphere: oxygen concentration of 1000 volume ppm or more and 30,000 volume ppm or less, and heating temperature: 600 °C or more;

a reducing process of holding the blank sheet under the following conditions:

atmosphere: hydrogen concentration of 8 vol% or more and 30 vol% or less, holding temperature: 700 °C or more, and holding time: 20 s or longer;

a soaking process of holding the blank sheet under the following conditions:

atmosphere: hydrogen concentration of 0.2 vol% or more and less than 8 vol%, soaking temperature: 700 °C or more and less than 900 °C, and soaking time: 20 s to 300 s;

a rapid heating process of heating the blank sheet under the following conditions:

atmosphere: hydrogen concentration of 0.2 vol% or more and 30 vol% or less, average heating rate from the soaking temperature: 10 °C/s or more, and maximum arrival temperature: the soaking temperature + 10 °C or more;

a cooling process of cooling the blank sheet under the following conditions:

atmosphere: hydrogen concentration of 0.2 vol% or more and 30 vol% or less, residence time in a temperature range from the maximum arrival temperature in the rapid heating process to the soaking temperature: 20 s or shorter, and cooling stop temperature: 500 °C or less; and a coating or plating treatment process of carrying out a coating or plating treatment on one or both sides of the blank sheet to obtain the coated or plated steel sheet.

2. The method of producing a coated or plated steel sheet according to 1, above, satisfying at least one of the following (1) to (3):

(1) atmosphere of the soaking process: hydrogen concentration is 0.2 vol% or more and 5 vol% or less,
(2) atmosphere of the rapid heating process: hydrogen concentration is 0.2 vol% or more and less than 8 vol%, and
(3) atmosphere in the cooling process: hydrogen concentration is 0.5 vol% or more and 20 vol% or less.

3. The method of producing a coated or plated steel sheet according to 1 or 2, above, wherein the chemical composition further contains, in mass%,

C: 0.05 % or more and 0.40 % or less,
P: 0.100 % or less,
S: 0.0200 % or less,
Al: 0.003 % or more and 2.000 % or less, and
N: 0.0100 % or less,
with the balance being Fe and inevitable impurity.

4. The method of producing a coated or plated steel sheet according to 3, above, wherein the chemical composition further contains, in mass%, at least one selected from:

B: 0.0100 % or less,
Ti: 0.200 % or less,
Nb: 0.200 % or less,
Sb: 0.200 % or less,
Sn: 0.200 % or less,
V: 0.100 % or less,
Cu: 1.00 % or less,
Cr: 1.00 % or less,
Ni: 1.00 % or less,
Mo: 1.00 % or less,
Ta: 0.100 % or less,
W: 0.500 % or less,
Zr: 0.020 % or less,
Ca: 0.0200 % or less
Mg: 0.0200 % or less,
Zn: 0.020 % or less,
Co: 0.020 % or less,
Ce: 0.0200 % or less,
Se: 0.0200 % or less,
Te: 0.0200 % or less,
Ge: 0.0200 % or less,
As: 0.0200 % or less,
Sr: 0.0200 % or less,
Cs: 0.0200 % or less,
Hf: 0.0200 % or less,
Pb: 0.0200 % or less,
Bi: 0.0200 % or less, and
REM: 0.0200 % or less,

5. The method of producing a coated or plated steel sheet according to any one of 1 to 4, above, wherein the coating or plating treatment is a hot-dip galvanizing treatment or a hot-dip galvannealing treatment.
6. The method of producing a coated or plated steel sheet according to any one of 1 to 4, above, wherein the coating or plating treatment is a hot-dip galvannealing treatment,

the method further comprising, after the coating or plating treatment process,

a cooling-reheating process of cooling the coated or plated steel sheet under the following condition:

cooling stop temperature: Ms temperature or less
followed by reheating the coated or plated steel sheet under the following conditions:

atmosphere: hydrogen concentration of 0.2 vol% or less,
reheating temperature: 100 °C or more and 450 °C or less, and
reheating time: 5 s or longer.

7. The method of producing a coated or plated steel sheet according to 6, above, wherein the cooling stop temperature in the cooling-reheating process is (Ms temperature - 50 °C) or less.

(Advantageous Effect)

According to the present disclosure, it is possible to produce a coated or plated steel sheet that has both excellent coatability and excellent hydrogen embrittlement resistance, even in a case where a steel sheet having a chemical composition containing large amounts of Si and Mn is used as a blank sheet. That is, according to the present disclosure, it is possible to produce a coated or plated steel sheet that has high strength and that achieves both excellent coatability and excellent hydrogen embrittlement resistance.

DETAILED DESCRIPTION

The following describes embodiments of the present disclosure. First, essential points of the method of producing a coated or plated steel sheet according to an embodiment of the present disclosure are described.
When a steel sheet having a chemical composition containing large amounts of the easily oxidizable elements Si and Mn is used as a blank sheet, the following points are important in order to obtain excellent coatability.
That is, in a process prior to the coating or plating treatment process, the blank sheet is oxidized, in other words, oxides that are mainly Fe (hereinafter also referred to as Fe oxides) are formed at the blank sheet surface, and then these Fe oxides are reduced. However, the reduction of Fe oxides requires heat treatment in an atmosphere with a high hydrogen concentration, which inevitably causes a large amount of hydrogen to enter into the blank sheet. When the hydrogen concentration in the heat treatment atmosphere is low, the reduction of Fe oxides is not sufficiently carried out, and Fe oxides remaining at the blank sheet surface lead to degradation of coatability.
Therefore, in the method of producing a coated or plated steel sheet according to an embodiment of the present disclosure, the heat treatment is divided into a reducing process and a soaking process. In the reducing process, the Fe oxides are reduced in a high hydrogen concentration atmosphere. Next, in the soaking process, the hydrogen concentration in the atmosphere is decreased to a level at which Fe is not reoxidized, thereby decreasing the amount of hydrogen that entered the blank sheet in the reducing process. However, holding at a high temperature for a long period of time in the soaking process increases the amount of austenite, which has a high hydrogen solubility, and this may lead to an increase in the amount of hydrogen dissolved in the blank sheet (hereinafter also referred to as steel hydrogen content). Therefore, in the method of producing a coated or plated steel sheet according to an embodiment of the present disclosure, the soaking process is carried out at a relatively low temperature at which recrystallization proceeds. After the recrystallization is completed, the blank sheet is rapidly heated to secure the required amount of austenite. As a result, it is possible to produce a coated or plated steel sheet that has high strength, and also has excellent coatability and excellent hydrogen embrittlement resistance.
The following is a description of each process of the method of producing a coated or plated steel sheet according to an embodiment of the present disclosure.

[Preparation process]

First, a blank sheet is prepared that has a chemical composition containing, in mass%, Si: 0.10 % or more and 2.00 % or less and Mn: 1.00 % or more and 5.00 % or less. Such a blank sheet may be prepared, for example, by production according to a conventional method. As one example, a blank sheet may be prepared by hot rolling and cold rolling a steel slab having the chemical composition to produce a cold-rolled steel sheet. The conditions for hot rolling and cold rolling are not particularly limited, and may be in accordance with conventional methods. The blank sheet corresponds to the base steel sheet of the coated or plated steel sheet after coating or plating treatment. The coated or plated steel sheet has a coated or plated layer on one or both sides of the base steel sheet.
Next, the chemical composition of the blank sheet is described. Hereinafter, although the unit in all chemical compositions is "mass%", this may be indicated simply as "%", unless otherwise specified.

Si: 0.10 % or more and 2.00 % or less

Si is a solid-solution-strengthening element and contributes to increasing the strength of the steel sheet. Further, Si has an effect of suppressing carbide formation and making it easier to obtain retained austenite. That is, Si is an element that is effective in achieving both strength and ductility of the steel sheet. In order to obtain such effects, Si content is 0.10 % or more. On the other hand, when the Si content exceeds 2.00 %, hot rolling manufacturability and cold rolling manufacturability are significantly degraded. This may adversely affect productivity or may even decrease the ductility of the blank sheet itself. Further, a large amount of silicon oxide is formed at the blank sheet surface, which may prevent good coatability from being obtained. The Si content is therefore 0.10 % or more and 2.00 % or less. The Si content is preferably 0.25 % or more. Further, the Si content is preferably 1.70 % or less.

Mn: 1.00 % or more and 5.00 % or less

Like Si, Mn is a solid-solution-strengthening element and contributes to increasing the strength of the steel sheet. Further, Mn is an element that has an effect of increasing hardenability and promoting the formation of retained austenite, bainite, and martensite. To obtain these effects, Mn content is 1.00 % or more. On the other hand, the Mn content exceeding 5.00 % leads to an increase in costs. Further, the formation of Mn oxides at the blank sheet surface during coating or plating treatment may not be sufficiently suppressed, and good coatability may not be obtainable. The Mn content is therefore 1.00 % or more and 5.00 % or less. The Mn content is preferably 1.50 % or more. The Mn content is more preferably 2.00 % or more. Further, the Mn content is preferably 4.00 % or less. The Mn content is more preferably 3.50 % or less.

The chemical composition of the blank sheet is not particularly limited as long as the Si content and the Mn content are in the above ranges. Further, for example, in order to achieve a tensile strength of 340 MPa or more, the following chemical composition is preferred.

C: 0.05 % or more and 0.40 % or less,
Si: 0.10 % or more and 2.00 % or less,
Mn: 1.00 % or more and 5.00 % or less,
P: 0.100 % or less,
S: 0.0200 % or less,
Al: 0.003 % or more and 2.000 % or less, and
N: 0.0100 % or less,
with the balance being Fe and inevitable impurity.

C: 0.05 % or more and 0.40 % or less

C is an element that is effective in increasing the strength of the steel sheet. Further, C contributes to increasing strength by forming martensite, which is one of the hard phases in the steel microstructure. C content is therefore preferably 0.05 % or more. The C content is more preferably 0.07 % or more. Further, in order to obtain good weldability, the C content is preferably 0.40 % or less. Further, the C content is more preferably 0.35 % or less.

P: 0.100 % or less (not including 0 %)

P content is preferably 0.100 % or less. The P content is more preferably 0.050 % or less. By suppressing the P content in this way, better weldability is obtainable. Further, suppressing the P content may prevent P from segregating at grain boundaries, thus improving ductility, bendability, and toughness in particular. Further, ferrite transformation can be suppressed, and coarsening of crystal grains may be prevented. A lower limit of the P content is not particularly limited. However, in view of production technology constraints, the P content may be more than 0 % and may be 0.001 % or more.

S: 0.0200 % or less (not including 0 %)

S content is preferably 0.0200 % or less. The S content is more preferably 0.0150 % or less. The S content is even more preferably 0.0100 % or less. By suppressing the S content in this way, a decrease in weldability may be prevented. Further, a decrease in ductility during hot rolling may be prevented, suppressing hot cracking, and surface characteristics are improved. Further, formation of coarse sulfides may be prevented, making better ductility, bendability and stretch flangeability obtainable. A lower limit of the S content is not particularly limited. However, in view of production technology constraints, the S content may be more than 0 % and may be 0.0001 % or more.

Al: 0.003 % or more and 2.000 % or less

Al is an element that is thermodynamically easily oxidized. Therefore, Al oxidizes prior to Si and Mn. That is, Al has an effect of suppressing oxidation of Si and Mn in the surface layer of the blank sheet and promoting the oxidation of Si and Mn in the blank sheet. Such effects are obtainable with Al content of 0.003 % or more. On the other hand, from a cost perspective, the Al content is preferably 2.000 % or less. Therefore, the Al content is preferably 0.003 % or more and 2.000 % or less. The Al content is more preferably 0.010 % or more.

N: 0.0100 % or less (not including 0 %)

N content is preferably 0.0100 % or less. By setting the N content to 0.0100 % or less, N can be more suitably prevented from forming coarse nitrides with Ti, Nb, and V at high temperatures. As a result, impairment of the effect of increasing the strength of the steel sheet by adding Ti, Nb, and V may be prevented. Better toughness is also obtainable. Further, occurrence of slab cracking and surface defects during hot rolling may be prevented. The N content is therefore preferably 0.0100 % or less. The N content is more preferably 0.0050 % or less. A lower limit of N is not particularly limited. However, in view of production technology constraints, the N content may be more than 0 % and may be 0.0005 % or more.
As described above, the blank sheet has a chemical composition that contains, for example, the above-mentioned basic components, with the balance other than the basic components including Fe (iron) and inevitable impurity. Further, the blank sheet preferably has a chemical composition containing the basic components with the balance being Fe and inevitable impurity. In addition to the basic components described above, the blank sheet may contain at least one element selected from the following as an optional additive element, either alone or in combination.

B: 0.0100 % or less,
Ti: 0.200 % or less,
Nb: 0.200 % or less,
Sb: 0.200 % or less,
Sn: 0.200 % or less,
V: 0.100 % or less,
Cu: 1.00 % or less,
Cr: 1.00 % or less,
Ni: 1.00 % or less,
Mo: 1.00 % or less,
Ta: 0.100 % or less,
W: 0.500 % or less,
Zr: 0.020 % or less,
Ca: 0.0200 % or less
Mg: 0.0200 % or less,
Zn: 0.020 % or less,
Co: 0.020 % or less,
Ce: 0.0200 % or less,
Se: 0.0200 % or less,
Te: 0.0200 % or less,
Ge: 0.0200 % or less,
As: 0.0200 % or less,
Sr: 0.0200 % or less,
Cs: 0.0200 % or less,
Hf: 0.0200 % or less,
Pb: 0.0200 % or less,
Bi: 0.0200 % or less, and
REM: 0.0200 % or less.

The defined effects are obtainable whenever content is equal to or less than the upper limits indicated above, and therefore there is no particular lower limit for the above optional additive elements. Further, when any of the above optional additional elements are included below a preferred lower limit described below, such an element is included as an inevitable impurity.

B: 0.0100 % or less

B is an element that is effective in improving the hardenability of steel. In order to improve the hardenability, B content is preferably 0.0001 % or more. The B content is more preferably 0.0005 % or more. Further, in order to obtain better formability, when B is contained, the B content is preferably 0.0100 % or less. The B content is more preferably 0.0050 % or less.

Ti: 0.200 % or less

Ti is an element effective for strengthening of steel by precipitation. A lower limit of Ti is not particularly limited. However, in order to obtain the effect of strength adjustment, Ti content is preferably 0.001 % or more. Further, in order to obtain better formability, when Ti is contained, the Ti content is preferably 0.200 % or less. The Ti content is more preferably 0.060 % or less.

Nb: 0.200 % or less

Nb is an element that is effective in improving the strength of steel. In order to obtain this effect, the Nb content is preferably 0.001 % or more. The Nb content is more preferably 0.005 % or more. Further, by setting the Nb content to 0.200 % or less, an increase in costs can be prevented. Therefore, in a case where Nb is contained, the Nb content is preferably 0.200 % or less. The Nb content is more preferably 0.060 % or less.

Sb: 0.200 % or less

Sb is an element that suppresses excessive decarburization in the surface layer of the blank sheet and helps prevent a decrease in the amount of martensite formed. That is, Sb can be added for the purpose of improving fatigue resistance and surface quality of the steel sheet. To obtain such effects, Sb content is preferably 0.001 % or more. Further, in order to obtain better toughness, when Sb is contained, the Sb content is preferably 0.200 % or less. The Sb content is more preferably 0.060 % or less.

Sn: 0.200 % or less

Sn is an element that is effective in suppressing decarburization, denitrification, and the like, and in suppressing a decrease in the strength of steel. In order to obtain such effects, Sn content is preferably 0.002 % or more. On the other hand, when Sn is contained, in order to obtain better impact resistance, the Sn content is preferably 0.200 % or less. The Sn content is more preferably 0.060 % or less.

V: 0.100 % or less

V is an element that is effective in improving the strength of steel. In order to obtain such an effect, V content is preferably 0.001 % or more. The V content is more preferably 0.005 % or more. Further, by setting the V content to 0.100 % or less, an increase in costs may be prevented. Therefore, when V is contained, the V content is preferably 0.100 % or less. The V content is more preferably 0.060 % or less.

Cu: 1.00 % or less

Cu is an element that is effective in improving the hardenability of steel. Further, Cu is an element that is effective in keeping the area fraction of hard phases within a more suitable range, and in keeping the tensile strength within a more suitable range. In order to obtain such effects, Cu content is preferably 0.005 % or more. The Cu content is more preferably 0.020 % or more. Further, when Cu is contained, from the viewpoint of preventing an increase in costs, the Cu content is preferably 1.00 % or less. The Cu content is more preferably 0.20 % or less.

Cr: 1.00 % or less

Cr is an element that improves hardenability and improves the balance between strength and ductility. In order to obtain such effects, Cr content is preferably 0.001 % or more. Further, when Cr is contained, from the viewpoint of preventing an increase in costs, the Cr content is preferably 1.00 % or less. The Cr content is more preferably 0.80 % or less.

Ni: 1.00 % or less

Ni is an element that improves hardenability and improves the balance between strength and ductility. In order to obtain such effects, Ni content is preferably 0.005 % or more. Further, when Ni is contained, from the viewpoint of preventing an increase in costs, the Ni content is preferably 1.00 % or less. The Ni content is more preferably 0.80 % or less.

Mo: 1.00 % or less

Mo is an element that has an effect of strength adjustment. In order to obtain such an effect, Mo content is preferably 0.005 % or more. The Mo content is more preferably 0.01 % or more. Further, when Mo is contained, from the viewpoint of preventing an increase in costs, the Mo content is preferably 0.80 % or less. The Mo content is more preferably 0.60 % or less.

Ta: 0.100 % or less

Ta is an element that has an effect of improving strength. In order to obtain such an effect, Ta content is preferably 0.001 % or more. Further, when Ta is contained, from the viewpoint of preventing an increase in costs, the Ta content is preferably 0.100 % or less. The Ta content is more preferably 0.050 % or less.

W: 0.500 % or less

W is an element that has an effect of improving strength. In order to obtain such an effect, W content is preferably 0.001 % or more. The W content is more preferably 0.003 % or more. Further, when W is contained, from the viewpoint of preventing an increase in costs, the W content is preferably 0.500 % or less. The W content is more preferably 0.450 % or less.

Zr: 0.020 % or less

Zr is an element that has the effects of improving ultimate deformability and stretch flangeability of the steel sheet. In order to obtain such effects, Zr content is preferably 0.0005 % or more. The Zr content is more preferably 0.0010 % or more. Further, when Zr is contained, from the viewpoint of preventing an increase in costs, the Zr content is preferably 0.020 % or less. The Zr content is more preferably 0.010 % or less.

Ca: 0.0200 % or less

Ca is an element that has the effects of controlling morphology of sulfides and further improving ductility and toughness. In order to obtain such effects, Ca content is preferably 0.0005 % or more. Further, when Ca is contained, from the viewpoint of obtaining better ductility, the Ca content is preferably 0.0200 % or less. The Ca content is more preferably 0.0100 % or less.

Mg: 0.0200 % or less

Mg is an element that has the effects of controlling the morphology of sulfides and further improving ductility and toughness. In order to obtain such effects, Mg content is preferably 0.0005 % or more. Further, when Mg is contained, from the viewpoint of obtaining better ductility, the Mg content is preferably 0.0200 % or less. The Mg content is more preferably 0.0100 % or less.

Zn: 0.020 % or less

Zn is an element that has the effects of improving the ultimate deformability and the stretch flangeability of the steel sheet. In order to obtain such effects, Zn content is preferably 0.001 % or more. Further, when Zn is contained, from the viewpoint of preventing an increase in costs, the Zn content is preferably 0.020 % or less. The Zn content is more preferably 0.010 % or less.

Co: 0.020 % or less

Co is an element that has the effects of improving the ultimate deformability and the stretch flangeability of the steel sheet. In order to obtain such effects, Co content is preferably 0.001 % or more. Further, when Co is contained, from the viewpoint of preventing an increase in costs, the Co content is preferably 0.020 % or less. The Co content is more preferably 0.010 % or less.

Ce, Se, Te, Ge, As, Sr, Cs, Hf, Pb, Bi, REM: 0.0200 % or less

All of the above elements have the effects of improving the ultimate deformability and the stretch flangeability of the steel sheet. In order to obtain such effects, content of at least one of the above elements is preferably 0.0001 % or more. When the above elements are contained, from the viewpoint of preventing an increase in costs, the content of each of the above elements is preferably 0.0200 % or less.

Elements other than those described above are Fe and inevitable impurity.

Further, thickness of the blank sheet is not particularly limited. For example, the thickness of the blank sheet may be 0.5 mm or more and 3.2 mm or less.

Before the blank sheet is subjected to coating or plating treatment, the blank sheet is subjected to a heat treatment in which the atmosphere and heat pattern are appropriately controlled. Specifically, an oxidizing process, a reducing process, a soaking process, a rapid heating process, and a cooling process are carried out according to the following conditions. As one example, the processes are carried out in a CGL. Configuration of the CGL is not particularly limited. For example, the CGL may include a continuous annealing furnace in which a heating zone, a soaking zone, and a cooling zone are arranged in this order, a hot-dip galvanizing line provided downstream of the cooling zone, and an alloying furnace provided downstream of the hot-dip galvanizing line. As one example, the blank sheet is passed through the heating zone, the soaking zone, and the cooling zone in this order to undergo the heat treatment, and then the blank sheet discharged from the cooling zone is subjected to hot-dip galvanization using the hot-dip galvanizing line to obtain a hot-dip galvanized steel sheet, and then the hot-dip galvanized steel sheet is subjected to an alloying treatment using the alloying furnace to obtain a galvannealed steel sheet.

[Oxidizing process]

In the oxidizing process, the blank sheet is heated under the following conditions:

atmosphere: oxygen concentration of 1000 volume ppm or more and 30,000 volume ppm or less, and
heating temperature: 600 °C or more.

This causes the blank sheet to be oxidized, forming Fe oxides at the blank sheet surface. As an example, the oxidizing process is carried out in the heating zone of a CGL. The temperature is the surface temperature of the blank sheet. The same applies to the following processes. Further, the average heating rate in each of the following processes is based on the surface temperature of the blank sheet unless otherwise specified.

Atmosphere: oxidizing atmosphere having oxygen concentration of 1000 volume ppm or more and 30,000 volume ppm or less

By setting the oxygen concentration in the atmosphere in the oxidizing process (hereinafter also simply referred to as oxygen concentration) to 1000 volume ppm or more, an oxidizing atmosphere is created, and oxidation of the blank sheet is promoted. When the oxygen concentration is less than 1000 volume ppm, the oxidation of the blank sheet is insufficient, and excellent coatability is not obtained. On the other hand, when the oxygen concentration exceeds 30,000 volume ppm, the blank sheet is excessively oxidized. As a result, unreduced Fe oxides remain in the reducing process described below, which causes degradation of coatability. Therefore, the oxygen concentration is 1000 volume ppm or more and 30,000 volume ppm or less. The oxygen concentration is preferably 1500 volume ppm or more. The oxygen concentration is more preferably 2000 volume ppm or more. The oxygen concentration is preferably 29,500 volume ppm or less. The oxygen concentration is more preferably 29,000 volume ppm or less. Remaining gas other than oxygen ($O_2$) in the atmosphere of the oxidizing process is not particularly limited. As an example, the remaining gas is $N_2$, CO, $CO_2$, $H_2O$, and inevitable impurity, and combinations thereof. The ratio of these is not particularly limited.

Heating temperature: 600 °C or more

In order to promote the oxidation of the blank sheet in the oxidizing process, heating the blank sheet to 600 °C or more is required. When the heating temperature of the blank sheet is less than 600 °C, the blank sheet is not oxidized sufficiently, and excellent coatability is not obtained. The heating temperature of the blank sheet is therefore 600 °C or more. The heating temperature of the blank sheet is preferably 620 °C or more. An upper limit of the heating temperature of the blank sheet is not particularly limited. As an example, the heating temperature of the blank sheet is preferably 900 °C or less. By setting the heating temperature of the blank sheet to 900 °C or less, excessive oxidation of the blank sheet may be suitably prevented. As a result, unreduced Fe oxides remaining in the reducing process described below are prevented, and coatability is further improved. The heating temperature referred to here is the maximum arrival temperature in the oxidizing process.

Further, residence time in the temperature range of 600 °C or more in the oxidizing process is not particularly limited. For example, the residence time in the temperature range is preferably 1 s to 60 s.

[Reducing process]

Next, the blank sheet is held under the following conditions:

atmosphere: hydrogen concentration of 8 vol% or more and 30 vol% or less,
holding temperature: 700 °C or more, and
holding time: 20 s or longer.

This reduces the Fe oxides formed at the blank sheet surface in the oxidizing process.

Atmosphere: Hydrogen concentration of 8 vol% or more and 30 vol% or less

The atmosphere in the reducing process is a reducing atmosphere, and in particular, the higher the hydrogen concentration of the atmosphere (in this paragraph, also referred to simply as hydrogen concentration), the more the reduction of Fe oxides formed at the blank sheet surface is promoted. However, the greater the hydrogen concentration, the greater the steel hydrogen content, leading to a degradation in hydrogen embrittlement resistance. Here, when the hydrogen concentration is 8 vol% or less, unreduced Fe oxides remain, which causes degradation of coatability. On the other hand, when the hydrogen concentration exceeds 30 vol%, the Fe oxide reduction effect is saturated. Further, it becomes difficult to sufficiently decrease the steel hydrogen content in the soaking process described below. The hydrogen concentration is therefore 8 vol% or more and 30 vol% or less. The hydrogen concentration is preferably 20 vol% or less. The hydrogen concentration is more preferably 18 vol% or less. Further, the hydrogen concentration is preferably 12 vol% or more. Remaining gas other than hydrogen ($H_2$) in the atmosphere of the reducing process is not particularly limited. As an example, the remaining gas is $N_2$, $H_2O$, $CO_2$, $CO$, and inevitable impurity, and combinations thereof. The ratio of these is not particularly limited. The same applies to the remaining gas other than hydrogen ($H_2$) in the atmosphere of the soaking process, the rapid heating process, and the cooling process described below.

Holding temperature: 700 °C or more

When the temperature at which the blank sheet is held in the reducing process (hereinafter also referred to as the holding temperature) is less than 700 °C, unreduced Fe oxides remain, causing degradation of the coatability. The holding temperature is therefore 700 °C or more. The holding temperature is preferably 750 °C or more. An upper limit of the holding temperature is not particularly limited. However, from the viewpoint of more suitably preventing deterioration of the furnace body, the holding temperature is preferably 950 °C or less. The holding temperature is the maximum temperature in the reducing process. Further, in the reducing process, the temperature may be constant or may vary as long as the temperature is within a range of 700 °C or more.

Holding time: 20 s or longer

A longer holding time in the reducing process (hereinafter also referred to simply as holding time) is more advantageous in completing the reduction of Fe oxides. When the holding time is shorter than 20 s, the reduction of Fe oxides may not be completed. The holding time is therefore 20 s or longer. The holding time is preferably 25 s or longer. An upper limit of the holding time is not particularly limited. However, from the viewpoint of productivity, the holding time is preferably 150 s or shorter. The holding time is the residence time in the temperature range of 700 °C or more in the reducing process.

[Soaking process]

Next, the blank sheet is held under the following conditions:

atmosphere: hydrogen concentration of 0.2 vol% or more and less than 8 vol%,
soaking temperature: 700 °C or more and less than 900 °C, and

soaking time: 20 s to 300 s.

This decreases the amount of hydrogen in the blank sheet that entered during the reducing process and recrystallizes the steel microstructure.

Atmosphere: hydrogen concentration of 0.2 vol% or more and less than 8 vol%

In the soaking process, the steel sheet is held in an atmosphere having a lower hydrogen concentration than in the reducing process, thereby decreasing the amount of hydrogen in the blank sheet that previously entered the blank sheet. For this reason, the hydrogen concentration in the atmosphere during the soaking process (in this paragraph, also referred to simply as hydrogen concentration) is less than 8 vol%. The hydrogen concentration is preferably 5 vol% or less. On the other hand, when the hydrogen concentration is less than 0.2 vol%, controlling the hydrogen concentration uniformly inside the furnace becomes difficult. Further, there is a risk that reduced Fe may be reoxidized. The hydrogen concentration is therefore 0.2 vol% or more. The hydrogen concentration is preferably 0.5 vol% or more.

Soaking temperature: 700 °C or more and less than 900 °C

When the soaking temperature is less than 700 °C, there is a risk that reduced Fe may be reoxidized. Further, recrystallization of the steel microstructure may be insufficient, or the volume fraction of ferrite may become excessive, making it impossible to obtain the required properties. The soaking temperature is therefore 700 °C or more. The soaking temperature is preferably 750 °C or more. In the method of producing a coated or plated steel sheet according to an embodiment of the present disclosure, the rapid heating process, described later, is carried out to obtain the desired steel microstructure, and therefore it suffices that the soaking process promotes recrystallization. Further, when the soaking temperature is excessively increased, the amount of austenite increases, which causes an increase in the steel hydrogen content. The soaking temperature is therefore less than 900 °C. The soaking temperature is preferably 880 °C or less. The soaking temperature is the maximum temperature in the soaking process. Further, in the soaking process, the temperature may be constant or may vary as long as the temperature is in a range from 700 °C to less than 900 °C

Soaking time: 20 s to 300 s

When the holding time in the soaking process (hereinafter also referred to as soaking time) is shorter than 20 s, the steel hydrogen content may not be sufficiently decreased. On the other hand, when the soaking time exceeds 300 s, a large amount of Si oxide or Mn oxide is formed in the surface layer of the blank sheet, which may lead to degradation of coatability. The soaking time is therefore 20 s to 300 s. The soaking time is preferably 50 s or longer. Further, the soaking time is preferably 200 s or shorter. The soaking time is the residence time in the temperature range from 700 °C to less than 900 °C in the soaking process.

[Rapid heating process]

Next, the blank sheet is held under the following conditions:

atmosphere: hydrogen concentration of 0.2 vol% or more and 30 vol% or less,
average heating rate from soaking temperature: 10 °C/s or more, and
maximum arrival temperature: soaking temperature + 10 °C or more.

This allows the blank sheet to be heated in a short period of time to a temperature required to obtain the desired steel sheet texture, and therefore the desired mechanical properties such as strength.

Atmosphere: hydrogen concentration of 0.2 vol% or more and 30 vol% or less

In order to prevent reoxidation of the blank sheet surface, the hydrogen concentration in the atmosphere in the rapid heating process (in this paragraph, referred to simply as hydrogen concentration) is 0.2 vol% or more. The hydrogen concentration is preferably 0.5 vol% or more. As described later, in the rapid heating process, the heating rate is increased to suppress hydrogen entry into the steel. However, completely preventing hydrogen from entering into steel is difficult. For this reason, the hydrogen concentration is 30 vol% or less. The hydrogen concentration is preferably less than 8 vol%. The hydrogen concentration is more preferably less than 5 vol%.

Average heating rate from soaking temperature: 10 °C/s or more

The steel hydrogen content increases with an increase in the temperature of the blank sheet and an increase in the amount of austenite in the steel microstructure of the blank sheet. In order to suppress such an increase in the steel hydrogen content, it is preferable to heat the steel to a temperature required to obtain a desired steel microstructure in as short a time as possible. Therefore, the average heating rate from the soaking temperature in the rapid heating process (hereinafter also referred to as the average heating rate) is 10 °C/s or more. The average heating rate is preferably 20 °C/s or more. The average heating rate is more preferably 30 °C/s or more. An upper limit of the average heating rate is not particularly limited. However, from the viewpoint of ease of industrial implementation, the average heating rate is preferably 300 °C/s or less. The average heating rate is more preferably 150 °C/s or less.

Maximum arrival temperature: soaking temperature + 10 °C or more

As described above, in the method of producing a coated or plated steel sheet according to an embodiment of the present disclosure, the soaking temperature is set relatively low in the soaking process to decrease hydrogen in the blank sheet, while a desired steel microstructure is obtained in the rapid heating process. The maximum arrival temperature in the rapid heating process is therefore the soaking temperature + 10 °C or more. The maximum arrival temperature in the rapid heating process is preferably the soaking temperature + 15 °C or more. The maximum arrival temperature is more preferably the soaking temperature + 20 °C or more. An upper limit of the maximum arrival temperature in the rapid heating process is not particularly limited. However, in order to more effectively prevent deterioration of the furnace body, the maximum arrival temperature in the rapid heating process is preferably 950 °C or less.

After the maximum arrival temperature is reached, it is preferable to start cooling immediately, for example, within 20 s.

The dew points in the reducing process, the soaking process, and the rapid heating process are not particularly limited. However, from the viewpoint of industrial ease of handling, it is preferable to set the dew point to -50 °C or more in each process. By setting the dew point to -50 °C or more, the cost of apparatus required to maintain the atmosphere can be further decreased. Further, in each process, the dew point is preferably +20 °C or less. By setting the dew point to +20 °C or less, controlling the dew point inside the furnace becomes easier. Further, adverse effects on the furnace body can be suitably avoided.

In the reducing process, the soaking process, and the rapid heating process, the atmospheres (hydrogen concentrations and dew points) and the temperatures may be different from each other. The control method is not particularly limited. For example, a furnace may be divided for each process, and the furnaces may be connected via sealing rollers. By controlling the atmosphere for each separated region, the atmospheres and temperatures in the reducing process, the soaking process, and the rapid heating process can be controlled within defined ranges.

Further, the method of monitoring the hydrogen concentration and dew point of the atmosphere is not particularly limited. For example, an atmosphere measurement port capable of directing gas inside the furnace to the outside of the furnace may be provided at a required position in each furnace. The atmosphere measurement port may be connected to a hydrogen concentration meter and a dew point meter to measure the hydrogen concentration and dew point of the atmosphere. Further, for example, when the reducing process, the soaking process, and the rapid heating process are carried out in separated regions of the furnace, independent atmosphere measurement ports may be provided at three locations: upper, middle, and lower portions of each region. It is preferable to determine the average values of the hydrogen concentration and the dew point measured by the hydrogen concentration meter and the dew point meter connected to each atmosphere measurement port as the hydrogen concentration and the dew point in each process.

[Cooling process]

Next, the blank sheet is cooled under the following conditions:

atmosphere: hydrogen concentration of 0.2 vol% or more and 30 vol% or less,
residence time in a temperature range from maximum arrival temperature in rapid heating process to soaking temperature: 20 s or shorter, and
cooling stop temperature: 500 °C or less.

Atmosphere: hydrogen concentration of 0.2 vol% or more and 30 vol% or less

In order to prevent reoxidation of the blank sheet surface, the hydrogen concentration in the atmosphere during the cooling process (in this paragraph, also referred to simply as hydrogen concentration) is 0.2 vol% or more. The hydrogen concentration is preferably 0.5 vol% or more. Further, a lower hydrogen concentration is more advantageous in decreasing the steel hydrogen content when cooling is stopped. For this reason, the hydrogen concentration is 30 vol% or less. The hydrogen concentration is preferably 20 vol% or less. The hydrogen concentration is more preferably less than 15 vol%.

Residence time in temperature range from maximum arrival temperature in rapid heating process to soaking temperature: 20 s or shorter

As described above, in the method of producing a coated or plated steel sheet according to an embodiment of the present disclosure, the soaking temperature is set relatively low in the soaking process to decrease hydrogen in the blank sheet, while a desired steel microstructure is obtained in the rapid heating process. However, in the cooling process, when the residence time in the temperature range from the maximum arrival temperature in the rapid heating process to the soaking temperature (hereinafter also referred to as the high temperature range residence time) exceeds 20 s, the above effect may be canceled out. The high temperature range residence time is therefore 20 s or shorter. The high temperature range residence time is preferably 15 s or shorter. The high temperature range residence time is more preferably 10 s or shorter. A lower limit of the high temperature range residence time is not particularly limited. The high temperature range residence time may be, for example, 0.1 s or longer.

• Cooling stop temperature: 500 °C or less

When a coated or plated layer is formed on the blank sheet surface in the coating or plating treatment process described below, desorbing hydrogen from the steel becomes difficult. Therefore, it is preferable to decrease the steel hydrogen content by lowering the temperature of the blank sheet as low as possible before the coating or plating treatment process to decrease the hydrogen solubility. The cooling stop temperature is therefore 500 °C or lower. A lower limit of the cooling stop temperature is not particularly limited, and may be any temperature that is industrially feasible. For example, the cooling stop temperature may be lower than room temperature (25 °C).

[Coating or plating treatment process]

Next, one or both sides of the blank sheet are subjected to a coating or plating treatment to obtain a coated or plated steel sheet having a coated or plated layer on one or both sides.

The type of coated or plated layer is not particularly limited, and examples include zinc coating or plating (coating or plating having a Zn content of 50 mass% or more), nickel coating or plating (coating or plating having a Ni content of 50 mass% or more), and aluminum coating or plating (coating or plating having an Al content of 50 mass% or more). The treatment method is not particularly limited, and examples include hot-dip coating, electroplating, and deposition coating such as PVD and CVD. Hereinafter, as examples, cases are described where a hot-dip galvanizing treatment and a hot-dip galvannealing treatment are carried out using a CGL.

In the hot-dip galvanizing treatment, the conditions for immersion in the hot-dip galvanizing bath are not particularly limited, and a typical method may be used. The composition of the hot-dip galvanizing bath (hereinafter also referred to as the coating bath composition) is not particularly limited, but typically consists of Al and Zn, with the balance being inevitable impurity. As an example, the Al concentration may be 0.05 mass% or more and 0.190 mass% or less. When the Al concentration is 0.05 mass% or more, occurrence of bottom dross can be more suitably prevented. Further, when the Al concentration is 0.190 mass% or less, occurrence of top dross can be more suitably prevented. From the viewpoint of cost, it is also preferable to set the Al concentration to 0.190 mass% or less. The temperature of the hot-dip galvanizing bath (hereinafter also referred to as the coating bath temperature) is not particularly limited. The coating bath temperature may be 420 °C or more. Further, the coating bath temperature may be 500 °C or less.

In addition, the coating weight per side of the coated or plated layer (hereinafter also simply referred to as coating weight) may be, as one example, 25 g/m$^2$ or more. When the coating weight is 25 g/m$^2$ or more, corrosion resistance is particularly good and the coating weight is particularly easy to control. Further, the coating weight may be, as one example, 80 g/m$^2$ or less. When the coating weight is 80 g/m$^2$ or less, the coating adhesion is particularly good. The method for adjusting the coating weight is not particularly limited. For example, gas wiping may be used to adjust the coating weight by adjusting the gas pressure and the distance between the wiping nozzle and the steel sheet.

In the hot-dip galvannealing treatment, the hot-dip galvanizing treatment described above is carried out, and then an alloying treatment is carried out. The conditions for the alloying treatment are not particularly limited. For example, alloying treatment temperature may be 440 °C or more. Further, the alloying treatment temperature may be 600 °C or less. Alloying treatment time may be 5 s to 60 s. The alloying treatment time is the holding time at the alloying treatment temperature.

In the galvannealed layer obtained by the alloying treatment, the degree of alloying (that is, the Fe content of the coated or plated layer, hereinafter also referred to simply as the alloying degree) is preferably 7 mass% or more. By setting the alloying degree to 7 mass% or more, it is possible to prevent η phase from remaining in the galvannealed layer. Therefore, when the cooling-reheating treatment process described later is carried out, the steel hydrogen content can be more suitably decreased. Further, the alloying degree is preferably 15 mass% or less. By setting the alloying degree to 15 mass% or less, it is possible to more effectively prevent the formation of $\Gamma$ phase at the interface between the galvannealed layer and the base steel sheet, and to obtain more suitable coating adhesion.

[Cooling-reheating process]

Further, when carrying out the hot-dip galvannealing treatment, it is preferable to carry out the cooling-reheating according to the following conditions after the coating or plating treatment process, and in particular, after the alloying treatment.

Cooling stop temperature: Ms temperature or less

Austenite can absorb more hydrogen into solid solution than ferrite. On the other hand, the diffusion rate of hydrogen is faster in BCC structure ferrite and in BCT structure martensite than in FCC structure austenite. Therefore, by transforming austenite into martensite and then carrying out reheating, described later, it is possible to more efficiently decrease the steel hydrogen content. Therefore, the cooling stop temperature (after the alloying treatment) is preferably the Ms temperature or less. Further, the greater the degree of undercooling relative to the Ms temperature, the more the martensitic transformation is promoted. This allows reheating, described later, to be carried out in a state where the amount of untransformed austenite is smaller, which is advantageous for decreasing the steel hydrogen content. Accordingly, the cooling stop temperature is more preferably (Ms temperature - 50 °C) or less. The cooling stop temperature is even more preferably (Ms temperature - 100 °C) or less. A lower limit of the cooling stop temperature is not particularly limited. However, when the cooling stop temperature is less than 20 °C, the cooling zone is required to have a high heat releasing capacity, which leads to an increase in costs. The cooling stop temperature is therefore preferably 20 °C or more.
Here, the Ms temperature is calculated as follows.

$$\text{Ms (°C)} = 539 - 423 \times \{[\text{C\%}] \times 100/(100 - [\alpha \text{ area\%}])\} - 30 \times [\text{Mn\%}] - 12 \times [\text{Cr\%}] - 18 \times [\text{Ni\%}] - 8 \times [\text{Mo\%}]$$

In this expression, [C%], [Mn%], [Cr%], [Ni%], and [Mo%] respectively represent the C content, Mn content, Cr content, Ni content and Mo content, in mass%, in the chemical composition of the base steel sheet of the coated or plated steel sheet (the blank sheet). Further, [$\alpha$ area%] is the area fraction, in %, of ferrite in the steel microstructure of the base steel sheet of the coated or plated steel sheet. The area fraction of ferrite in the steel microstructure of the base steel sheet of the coated or plated steel sheet is measured, for example, as follows. First, the coated or plated layer on the surface of the coated or plated steel sheet is removed. Next, a sample is cut out from the base steel sheet (blank sheet) of the coated or plated steel sheet such that a thickness cross-section (L-section) parallel to the rolling direction of the base steel sheet of the coated or plated steel sheet becomes an observation plane. The observation plane of the sample is then polished. The observation plane of the sample is then corroded with 1 vol% nital to reveal the steel microstructure. A 1/4 sheet thickness position of the base steel sheet of the coated or plated steel sheet (a position corresponding to 1/4 of the sheet thickness in the depth direction from the blank sheet surface) is then observed at $3000\times$ magnification by SEM for ten fields of view. In the observed images, ferrite in recesses has a flat internal texture and ferrite does not contain carbides. The area of the region occupied by ferrite is then determined for each field of view. Next, the total area of the region occupied by ferrite is divided by the total area of the observation field, and the result is multiplied by 100 to obtain the area fraction of ferrite in the steel microstructure of the base steel sheet of the coated or plated steel sheet. The measurement may be carried out immediately before the cooling-reheating process, that is, after the alloying treatment in the coating or plating treatment process, on a coated or plated steel sheet that has been rapidly cooled to a temperature of 200 °C or less by water quenching or the like at an average cooling rate of 50 °C/s or more in the temperature range from 200 °C to 600 °C. Further, it is preferable that the measurement is carried out in advance, for example, separately from the series of processes.
Next, preferably, the coated or plated steel sheet (galvannealed steel sheet) is reheated under the following conditions:

    atmosphere: hydrogen concentration of 0.2 vol% or less,
    reheating temperature: 100 °C or more and 450 °C or less, and
    reheating time: 5 s or longer.

Atmosphere: hydrogen concentration of 0.2 vol% or less

From the viewpoint of promoting the release of diffusible hydrogen in steel during the reheating, it is advantageous to lower the hydrogen concentration in the atmosphere (in this paragraph, also referred to simply as the hydrogen concentration). The hydrogen concentration is therefore preferably 0.2 vol% or less. The hydrogen concentration is more preferably 0.1 vol% or less. A lower limit of the hydrogen concentration is not particularly limited. However, hydrogen is inevitably contained in the atmosphere. The hydrogen concentration may therefore be, for example, 0.00001 vol% or more. Remaining gas other than hydrogen ($H_2$) in the atmosphere during the reheating is not particularly limited. As an example, the remaining gas is $N_2$, $O_2$, $H_2O$, $CO_2$, Ar, and inevitable impurity, and combinations thereof. The ratio of these is not particularly limited.

Reheating temperature: 100 °C or more to 450 °C or less

In order to fully obtain the effect of decreasing the steel hydrogen content, the reheating temperature is preferably 100 °C or more. On the other hand, when the reheating temperature exceeds 450 °C, there is a risk of degradation of coating appearance. The reheating temperature is therefore preferably 100 °C or more. The reheating temperature is preferably 450 °C or less. However, the reheating temperature is preferably equal to or more than the cooling stop temperature after the alloying treatment. Further, the reheating temperature is more preferably 120 °C or more. The reheating temperature is more preferably 430 °C or less. Here, the reheating temperature is the maximum arrival temperature during reheating. Further, in the reheating, the temperature may be constant or may vary as long as the temperature is in the range from 100 °C to 450 °C.

Reheating time: 5 s or longer

When the reheating time is shorter than 5 s, the effect of decreasing the hydrogen concentration in the steel may not be sufficiently obtained. The reheating time is therefore preferably 5 s or longer. The reheating time is more preferably 10 s or longer. The reheating time is even more preferably 30 s or longer. An upper limit of the reheating time is not particularly limited. However, from the viewpoint of productivity, the reheating time is preferably 300 s or less. The reheating time is a holding time in a temperature range from 100 °C to 450 °C, at a temperature equal to or more than the cooling stop temperature after the alloying treatment.

Conditions other than those described above are not particularly limited, and a conventional method may be used.

According to the method of producing a coated or plated steel sheet according to an embodiment of the present disclosure, a coated or plated steel sheet having a tensile strength of preferably 340 MPa or more is obtainable. The tensile strength is more preferably 500 MPa or more. The tensile strength is even more preferably 980 MPa or more. Here, the tensile strength is measured in accordance with JIS Z 2241. For example, a JIS No. 5 test piece is taken from the coated or plated steel sheet so that the longitudinal direction is perpendicular to the rolling direction of the coated or plated steel sheet (blank sheet). Using the test piece, a tensile test is carried out under the condition of a crosshead displacement speed Vc of $1.67 \times 10^{-1}$ mm/s, and the tensile strength is measured.

Further, according to the method of producing a coated or plated steel sheet according to an embodiment of the present disclosure, a coated or plated steel sheet having a decreased diffusible hydrogen content is obtainable. In particular, a coated or plated steel sheet having a diffusible hydrogen content of preferably 0.30 mass ppm (weight ppm) or less is obtainable. The diffusible hydrogen content is more preferably 0.20 weight ppm or less. A lower limit of the diffusible hydrogen content is not particularly limited. The diffusible hydrogen content may be, for example, 0.01 weight ppm or more.

Here, the diffusible hydrogen content is measured as follows. A test piece of 5 mm $\times$ 30 mm is cut out from the coated or plated steel sheet, and the coated or plated layer on the surface of the test piece is removed using a precision grinder. Next, a hydrogen analysis is carried out using a thermal desorption analyzer under the conditions of an analysis start temperature of 25 °C, an analysis end temperature of 300 °C, and a heating rate of 200 °C/h, to measure the amount of hydrogen released from the test piece. The cumulative amount of hydrogen released from the test piece in the temperature range from the analysis start temperature to 210 °C is taken as the diffusible hydrogen content.

Further, according to the method of producing a coated or plated steel sheet according to an embodiment of the present disclosure, a coated or plated steel sheet that combines excellent coatability with excellent hydrogen embrittlement resistance is obtainable. Here, excellent coatability means that, in the coatability evaluation of the examples described below, both the appearance evaluation and the adhesion evaluation achieve rank 1 or 2. Further, excellent hydrogen embrittlement resistance means that in the evaluation of hydrogen embrittlement resistance of the examples described below, rank 1 or 2 is achieved.

EXAMPLES

Cold-rolled steel sheets each having a thickness of 1.4 mm and having the chemical compositions listed in Table 1 (the balance being Fe and inevitable impurity) were prepared as blank sheets. Next, using the prepared blank sheets, coated or plated steel sheets were produced according to the conditions listed in Tables 2 and 3 and below. The cooling stop temperatures in the column of the cooling-reheating process in Tables 2 and 3 when the alloying treatment was not carried out are the cooling stop temperatures after the hot-dip galvanizing treatment.

- Coating bath composition: 0.13 mass% Al, balance being Zn and inevitable impurity
- Coating bath temperature: 460 °C
- Coating weight: 40 g/m$^2$ to 60 g/m$^2$
- Alloying degree: 8.0 mass% to 14.0 mass%
- Hydrogen concentration in reheating atmosphere in cooling-reheating process: 0.1 vol%

In the production of the coated or plated steel sheets, a CGL in which an upstream soaking zone and a downstream soaking zone were connected by sealing rollers was used. Further, conditions other than those mentioned above were in accordance with the general description above or conventional practice.

The tensile strength (TS) and the diffusible hydrogen content of the coated or plated steel sheets thus obtained were measured as described above. The diffusible hydrogen content was evaluated according to the following criteria. The evaluation results are listed in Tables 2 and 3.

Rank 1 (pass, particularly good): diffusible hydrogen content was 0.10 weight ppm or less
Rank 2 (pass, good): diffusible hydrogen content was more than 0.10 weight ppm and 0.20 weight ppm or less
Rank 3 (pass): diffusible hydrogen content was more than 0.20 weight ppm and 0.30 weight ppm or less
Rank 4 (fail): diffusible hydrogen content was more than 0.30 weight ppm

Further, the obtained coated or plated steel sheets were used to evaluate the coatability and hydrogen embrittlement resistance as described above. The evaluation results are listed in Tables 2 and 3.

<Coatability>

The "Appearance evaluation" and "Adhesion evaluation" of the coated or plated steel sheets were carried out by the following methods, and the coatability was evaluated based on the results of each evaluation as follows. Ranks 1 and 2 were considered to be passing results.

Rank 1 (pass, good): both "Appearance evaluation" and "Adhesion evaluation" were rank 1
Rank 2 (pass): either "Appearance evaluation" or "Adhesion evaluation" or both were rank 1 or 2 (excluding a case where both "Appearance evaluation" and "Adhesion evaluation" were rank 1)
Rank 3 (fail): either "Appearance evaluation" or "Adhesion evaluation" or both were rank 3

• Appearance evaluation

The surface of the coated or plated steel sheets (coated or plated layer) was visually observed and evaluated according to the following criteria. Ranks 1 and 2 were considered to be passing results.

Rank 1: no bare spots or uneven appearance
Rank 2: no bare spots, but uneven appearance
Rank 3: bare spot

• Adhesion evaluation

[Ball impact test]

When the coated or plated steel sheet was a hot-dip galvanized steel sheet (GI, a steel sheet produced where the coating or plating treatment was a hot-dip galvanizing treatment), the coating adhesion was evaluated by a ball impact test. Even when the coated or plated steel sheet is other than a galvannealed steel sheet as described later, such as an electrogalvanized steel sheet (EG, a steel sheet produced where the coating or plating treatment was an electrogalvanization treatment), the coating adhesion may be evaluated by the ball impact test.

That is, a ball was dropped under the conditions of a ball mass of 1.8 kg and a drop height of 100 cm, such that the ball collided with the coated or plated steel sheet. Next, the ball impact portion of the coated or plated steel sheet was peeled off with cellophane tape. Next, the presence or absence of peeling of the coated or plated layer was visually confirmed and evaluated according to the following criteria. Ranks 1 and 2 were considered to be passing results.

Rank 1: no peeling of the coated or plated layer
Rank 2: minor peeling of coated or plated layer
Rank 3: significant peeling of the coated or plated layer

When the ratio of the area of the peeled portion of the coated or plated layer to the total area of the steel sheet deformed by the ball collision (hereinafter also referred to as the peeled area ratio) was less than 20 %, this was defined as "minor peeling", and when the peeled area ratio was 20 % or more, this was defined as "significant peeling".

[Powdering test]

When the coated or plated steel sheet was a galvannealed steel sheet (GA, a steel sheet produced where the coating or plating treatment was a hot-dip galvannealing treatment), the coating adhesion was evaluated by a powdering test.

That is, a coated or plated steel sheet (length (rolling direction): 80 mm, width: 40 mm) was bent and unbent at 90 degrees so that the bending ridge line was perpendicular to the rolling direction. Next, a 24 mm wide cellophane tape was attached to the inside (compression side) of the bent portion of the coated or plated steel sheet parallel to the bending ridge line (aligning the bending ridge line with the width center of the cellophane tape), pressed so that the adhesive surface was in close contact with the steel sheet surface, and then peeled off. Then, the amount of zinc adhering to a 40 mm long section of the peeled off cellophane tape was measured as a Zn count number by fluorescent X-ray. The measurement conditions were as follows: measurement diameter: 30 mm, fluorescent X-ray accelerating voltage: 50 kV, acceleration current: 50 mA, and measurement time: 20 s. Next, the measured Zn count number was converted into a value per unit length (1 m), and the converted value (hereinafter also referred to as fluorescent X-ray count) was evaluated according to the following criteria. Ranks 1 and 2 were considered to be passing results.

Rank 1: fluorescent X-ray count was 0 to less than 8000
Rank 2: fluorescent X-ray count was 8000 to less than 15,000
Rank 3: fluorescent X-ray count was 15,000 or more

<Hydrogen embrittlement resistance>

Hydrogen embrittlement resistance was evaluated based on the presence or absence of cracks during resistance spot welding. That is, two test pieces of 30 mm $\times$ 100 mm were cut out from each obtained coated or plated steel sheet. Next, spacers (30 mm $\times$ 30 mm) each having a sheet thickness of 2 mm were placed on one of the test pieces so that the spacer separation was 40 mm (with the ends of the spacers aligned with the ends of the test piece), and the test piece and the spacers were fixed together by welding. Then, the other test piece was placed on top of the spacers, and the test piece and the spacers were fixed by welding. In this way, the spacers were sandwiched between the two test pieces. Next, the centers of the test pieces were joined by spot welding to prepare a welded test piece. Here, the welded test pieces were prepared so that the nugget diameter was 3.8 mm when the tensile strength of the coated or plated steel sheet was less than 1250 MPa, and the nugget diameter was 4.8 mm when the tensile strength of the coated or plated steel sheet was 1250 MPa or more. In the spot welding, an inverter direct current (DC) resistance spot welder was used, and the electrodes were dome types having tip diameters of 6 mm made of chrome copper. The electrode force was 380 kgf, the current passage time was 16 cycles/50 Hz, and the holding time (the time during which the pressure was maintained in the non-energized state after the current passage was ended): 5 cycles/50 Hz. The welding current value was set to a value that would form the above-mentioned nugget diameter. After welding, the welded test piece was left in an air environment for 24 h, and then the spacer portions were cut off from the welded test piece. Next, a cross-section of the nugget was observed with an optical microscope (magnification: 100$\times$), and the hydrogen embrittlement resistance was evaluated according to the following criteria.

Rank 1 (pass, good): no cracks
Rank 2 (pass): only microcracks having a length of 100 $\mu$m or less occurred
Rank 3 (fail): a crack longer than 100 $\mu$m

[Table 1]

| Table 1 | | | | | | | | | Unit: mass% |
|---|---|---|---|---|---|---|---|---|---|
| Steel sample ID | C | Si | Mn | P | S | Al | N | Other | Remarks |
| A | 0.199 | 1.03 | 3.02 | 0.01 | 0.0020 | 0.03 | 0.002 | - | Conforming steel |
| B | 0.119 | 1.45 | 3.04 | 0.02 | 0.0020 | 0.04 | 0.003 | - | Conforming steel |
| C | 0.103 | 1.45 | 2.92 | 0.02 | 0.0020 | 0.04 | 0.003 | - | Conforming steel |
| D | 0.096 | 0.46 | 2.98 | 0.01 | 0.0030 | 0.03 | 0.002 | - | Conforming steel |
| E | 0.127 | 0.54 | 2.58 | 0.02 | 0.0030 | 0.04 | 0.003 | Cr: 0.60 | Conforming steel |
| F | 0.154 | 2.42 | 3.12 | 0.01 | 0.0020 | 0.03 | 0.003 | - | Comparative steel |
| G | 0.149 | 1.54 | 5.14 | 0.01 | 0.0030 | 0.03 | 0.003 | - | Comparative steel |
| H | 0.113 | 0.77 | 2.75 | 0.01 | 0.0001 | 0.04 | 0.002 | Ti: 0.028 | Conforming steel |
| I | 0.122 | 0.86 | 3.33 | 0.01 | 0.0012 | 0.03 | 0.004 | B: 0.0018, Ti: 0.024 | Conforming steel |
| J | 0.179 | 0.83 | 2.98 | 0.01 | 0.0009 | 0.05 | 0.004 | Nb: 0.042 | Conforming steel |
| K | 0.116 | 0.91 | 2.79 | 0.01 | 0.0003 | 0.04 | 0.002 | Sb: 0.021 | Conforming steel |
| L | 0.085 | 0.81 | 2.99 | 0.01 | 0.0015 | 0.03 | 0.004 | Sn: 0.012 | Conforming steel |
| M | 0.118 | 0.89 | 2.69 | 0.01 | 0.0003 | 0.04 | 0.002 | V: 0.029 | Conforming steel |
| N | 0.154 | 1.05 | 2.75 | 0.01 | 0.0010 | 0.05 | 0.004 | Cu: 0.41 | Conforming steel |
| O | 0.131 | 0.89 | 2.85 | 0.01 | 0.0010 | 0.04 | 0.002 | Ni: 0.33 | Conforming steel |
| P | 0.093 | 0.78 | 2.86 | 0.02 | 0.0011 | 0.05 | 0.004 | Mo: 0.55 | Conforming steel |
| Q | 0.120 | 0.75 | 2.48 | 0.01 | 0.0010 | 0.04 | 0.002 | Ta: 0.004 | Conforming steel |
| R | 0.095 | 0.74 | 2.63 | 0.01 | 0.0005 | 0.05 | 0.004 | W: 0.013 | Conforming steel |
| S | 0.104 | 1.00 | 2.74 | 0.01 | 0.0014 | 0.04 | 0.004 | Zr: 0.0029 | Conforming steel |
| T | 0.151 | 0.78 | 2.95 | 0.01 | 0.0010 | 0.04 | 0.002 | Ca: 0.0010 | Conforming steel |
| U | 0.103 | 0.76 | 2.46 | 0.01 | 0.0007 | 0.05 | 0.004 | Mg: 0.0019 | Conforming steel |
| v | 0.097 | 1.15 | 2.55 | 0.01 | 0.0007 | 0.04 | 0.002 | Zn: 0.007 | Conforming steel |
| w | 0.095 | 0.97 | 2.61 | 0.01 | 0.0015 | 0.05 | 0.004 | Co: 0.006 | Conforming steel |
| X | 0.144 | 1.00 | 2.85 | 0.01 | 0.0009 | 0.05 | 0.005 | Ce: 0.0012 | Conforming steel |
| Y | 0.138 | 1.12 | 2.65 | 0.01 | 0.0003 | 0.04 | 0.002 | Se: 0.0018 | Conforming steel |
| Z | 0.086 | 0.90 | 2.95 | 0.01 | 0.0013 | 0.05 | 0.004 | Te: 0.0084 | Conforming steel |
| AA | 0.151 | 0.81 | 2.43 | 0.02 | 0.0009 | 0.04 | 0.002 | Ge: 0.0082 | Conforming steel |
| AB | 0.101 | 0.88 | 2.56 | 0.01 | 0.0014 | 0.05 | 0.004 | As: 0.0075 | Conforming steel |
| AC | 0.128 | 0.77 | 2.54 | 0.01 | 0.0009 | 0.04 | 0.003 | Sr: 0.0077 | Conforming steel |
| AD | 0.122 | 0.83 | 2.46 | 0.01 | 0.0008 | 0.05 | 0.004 | Cs: 0.0056 | Conforming steel |
| AE | 0.120 | 0.83 | 2.50 | 0.01 | 0.0001 | 0.04 | 0.002 | Hf: 0.0027 | Conforming steel |
| AF | 0.115 | 0.75 | 2.99 | 0.01 | 0.0010 | 0.05 | 0.004 | Pb: 0.0024 | Conforming steel |
| AG | 0.097 | 0.98 | 2.47 | 0.01 | 0.0007 | 0.04 | 0.002 | Bi: 0.0019 | Conforming steel |
| AH | 0.128 | 0.95 | 2.87 | 0.01 | 0.0008 | 0.05 | 0.004 | REM: 0.0033 | Conforming steel |

Underlining indicates a value outside an appropriate range of the present disclosure

Table 2

| No. | Steel sample ID | Oxidizing process | | Reducing process | | | | Soaking process | | | | Rapid heating process | | | Cooling process | | | Remarks |
|---|---|---|---|---|---|---|---|---|---|---|---|---|---|---|---|---|---|---|
| | | Oxygen conc. | Heating temp. | Hydrogen conc. | Holding temp. | Holding time | Dew point | Hydrogen conc. | Soaking temp. | Soaking time | Dew point | Hydrogen conc. | Average heating rate | Maximum arrival temp. | Hydrogen conc. | High temp. range residence time | Cooling stop temp. | |
| | | vol. ppm | °C | vol% | °C | s | °C | vol% | °C | s | °C | vol% | °C/s | °C | vol% | s | °C | |
| 1 | A | 2000 | 700 | 15 | 760 | 25 | -35 | 2.0 | 760 | 80 | -15 | 2.0 | 50 | 880 | 5 | 10 | 500 | Example |
| 2 | A | 2000 | 700 | 15 | 760 | 25 | -35 | 2.0 | 760 | 80 | -15 | 2.0 | 50 | 880 | 5 | 20 | 500 | Example |
| 3 | A | 2000 | 700 | 15 | 760 | 25 | -35 | 2.0 | 760 | 80 | -15 | 2.0 | 50 | 880 | 5 | 10 | 500 | Example |
| 4 | A | 2000 | 700 | 15 | 760 | 25 | -35 | 2.0 | 760 | 80 | -15 | 2.0 | 50 | 880 | 5 | 10 | 500 | Example |
| 5 | A | 2000 | 700 | 15 | 760 | 25 | -35 | 2.0 | 760 | 80 | -35 | 2.0 | 50 | 880 | 5 | 10 | 500 | Example |
| 6 | A | 2000 | 700 | 15 | 760 | 25 | -35 | 2.0 | 760 | 80 | -15 | 2.0 | 10 | 880 | 5 | 10 | 500 | Example |
| 7 | A | 2000 | 700 | 15 | 760 | 25 | -35 | 2.0 | 760 | 80 | -15 | 2.0 | 25 | 880 | 5 | 10 | 500 | Example |
| 8 | A | 2000 | 700 | 15 | 760 | 25 | -35 | 2.0 | 760 | 80 | -15 | 2.0 | 100 | 880 | 5 | 10 | 500 | Example |
| 9 | A | 2000 | 700 | 15 | 760 | 25 | -35 | 5.0 | 760 | 80 | -15 | 5.0 | 50 | 880 | 5 | 10 | 500 | Example |
| 10 | A | 2000 | 700 | 15 | 760 | 25 | -35 | 8.0 | 760 | 80 | -15 | 8.0 | 50 | 880 | 5 | 10 | 500 | Example |
| 11 | A | 2000 | 700 | 15 | 760 | 25 | -35 | 5.0 | 760 | 80 | -15 | 25.0 | 50 | 880 | 5 | 10 | 500 | Example |
| 12 | A | 2000 | 700 | 15 | 760 | 25 | -35 | 2.0 | 760 | 80 | -15 | 2.0 | 50 | 880 | 25 | 10 | 500 | Example |
| 13 | A | 2000 | 700 | 15 | 760 | 25 | -35 | 5.0 | 870 | 80 | -15 | 2.0 | 50 | 880 | 5 | 10 | 500 | Example |
| 14 | A | 2000 | 700 | 25 | 760 | 25 | -35 | 2.0 | 760 | 80 | -15 | 2.0 | 50 | 880 | 5 | 10 | 500 | Example |
| 15 | B | 2000 | 700 | 15 | 760 | 25 | -35 | 2.0 | 760 | 80 | -15 | 5.0 | 50 | 850 | 5 | 10 | 500 | Example |
| 16 | B | 2000 | 700 | 15 | 760 | 25 | -35 | 2.0 | 760 | 80 | -15 | 5.0 | 50 | 850 | 5 | 10 | 500 | Example |
| 17 | c | 2000 | 700 | 15 | 760 | 25 | -35 | 2.0 | 760 | 80 | -15 | 5.0 | 50 | 820 | 5 | 10 | 500 | Example |
| 18 | c | 2000 | 700 | 15 | 760 | 25 | -35 | 2.0 | 760 | 80 | -15 | 5.0 | 50 | 820 | 5 | 10 | 500 | Example |
| 19 | D | 2000 | 700 | 15 | 760 | 25 | -35 | 2.0 | 760 | 80 | -35 | 5.0 | 50 | 820 | 5 | 10 | 500 | Example |
| 20 | D | 2000 | 700 | 15 | 760 | 25 | -35 | 0.5 | 760 | 80 | -35 | 0.5 | 50 | 820 | 5 | 10 | 500 | Example |
| 21 | E | 2000 | 700 | 15 | 760 | 25 | -35 | 2.0 | 760 | 80 | -35 | 2.0 | 50 | 860 | 5 | 10 | 500 | Example |
| 22 | E | 2000 | 700 | 15 | 760 | 25 | -35 | 2.0 | 760 | 80 | -35 | 2.0 | 50 | 860 | 5 | 10 | 500 | Example |
| 23 | E | 2000 | 700 | 15 | 760 | 25 | -35 | 0.5 | 760 | 80 | -35 | 0.5 | 50 | 860 | 5 | 10 | 500 | Example |
| 24 | E | 2000 | 700 | 15 | 760 | 25 | -15 | 2.0 | 760 | 80 | -15 | 5.0 | 50 | 860 | 5 | 10 | 500 | Example |

EP 4 678 771 A1

21

(continued)

| No. | Steel sample ID | Oxidizing process | | Reducing process | | | | Soaking process | | | | Rapid heating process | | | Cooling process | | | Remarks |
|---|---|---|---|---|---|---|---|---|---|---|---|---|---|---|---|---|---|---|
| | | Oxygen conc. | Heating temp. | Hydrogen conc. | Holding temp. | Holding time | Dew point | Hydrogen conc. | Soaking temp. | Soaking time | Dew point | Hydrogen conc. | Average heating rate | Maximum arrival temp. | Hydrogen conc. | High temp. range residence time | Cooling stop temp. | |
| | | vol. ppm | °C | vol% | °C | s | °C | vol% | °C | s | °C | vol% | °C/s | °C | vol% | s | °C | |
| 25 | H | 2000 | 700 | 15 | 760 | 25 | -35 | 2.0 | 760 | 80 | -15 | 2.0 | 50 | 830 | 5 | 10 | 500 | Example |
| 26 | I | 2000 | 700 | 15 | 760 | 25 | -35 | 2.0 | 760 | 80 | -15 | 2.0 | 50 | 830 | 5 | 10 | 500 | Example |

GI: hot-dip galvanizing treatment, GA: hot-dip galvannealing treatment

Table 2 (cont'd)

| No. | Type | Coating or plating treatment process | | Cooling-reheating process | | | | Evaluation result | | | | | | | Remarks |
| | | Alloying treatment temp. | Alloying treatment time | Cooling stop temp. | Ms temp. | Reheating temp. | Reheating time | TS | Diffusible hydrogen content | | Appearance evaluation | Adhesion evaluation | Coatability | Hydrogen embrittlement resistance | |
| | - | °C | s | °C | °C | °C | s | MPa | wt. ppm | Rank | Rank | Rank | Rank | Rank | |
| 1 | GI | - | - | 50 | 364 | - | - | 1587 | 0.17 | 2 | 1 | 1 | 1 | 1 | Example |
| 2 | GI | - | - | 50 | 364 | - | - | 1547 | 0.18 | 2 | 1 | 1 | 1 | 1 | Example |
| 3 | GA | 550 | 20 | 50 | 364 | - | - | 1501 | 0.15 | 2 | 1 | 1 | 1 | 1 | Example |
| 4 | GA | 550 | 20 | 50 | 364 | 300 | 60 | 1486 | 0.10 | 1 | 1 | 1 | 1 | 1 | Example |
| 5 | GA | 550 | 20 | 50 | 364 | 300 | 60 | 1498 | 0.12 | 2 | 1 | 2 | 2 | 1 | Example |
| 6 | GA | 550 | 20 | 50 | 364 | 300 | 60 | 1547 | 0.04 | 1 | 1 | 1 | 1 | 1 | Example |
| 7 | GA | 550 | 20 | 50 | 364 | 300 | 60 | 1548 | 0.10 | 1 | 1 | 1 | 1 | 1 | Example |
| 8 | GA | 550 | 20 | 50 | 364 | 300 | 60 | 1486 | 0.15 | 2 | 1 | 1 | 1 | 1 | Example |
| 9 | GI | - | - | 50 | 364 | - | - | 1494 | 0.18 | 2 | 1 | 1 | 1 | 1 | Example |
| 10 | GI | - | - | 50 | 364 | - | - | 1525 | 0.20 | 2 | 1 | 1 | 1 | 2 | Example |
| 11 | GI | - | - | 50 | 364 | - | - | 1535 | 0.25 | 3 | 1 | 1 | 1 | 2 | Example |
| 12 | GI | - | - | 50 | 364 | - | - | 1565 | 0.23 | 3 | 1 | 1 | 1 | 2 | Example |
| 13 | GI | - | - | 50 | 364 | - | - | 1544 | 0.23 | 3 | 1 | 1 | 1 | 2 | Example |
| 14 | GI | - | - | 50 | 364 | - | - | 1498 | 0.22 | 3 | 1 | 1 | 1 | 2 | Example |
| 15 | GA | 550 | 20 | 50 | 370 | 200 | 60 | 1240 | 0.07 | 1 | 1 | 1 | 1 | 1 | Example |
| 16 | GA | 550 | 20 | 50 | 370 | 300 | 60 | 1214 | 0.05 | 1 | 1 | 1 | 1 | 1 | Example |
| 17 | GA | 550 | 20 | 200 | 342 | 400 | 60 | 1073 | 0.08 | 1 | 1 | 1 | 1 | 1 | Example |
| 18 | GA | 550 | 20 | 250 | 342 | 400 | 60 | 1084 | 0.09 | 1 | 1 | 1 | 1 | 1 | Example |
| 19 | GA | 550 | 20 | 50 | 355 | 300 | 60 | 1092 | 0.12 | 2 | 1 | 1 | 1 | 1 | Example |
| 20 | GA | 550 | 20 | 50 | 355 | 300 | 60 | 1083 | 0.03 | 1 | 1 | 1 | 1 | 1 | Example |
| 21 | GA | 550 | 20 | 50 | 390 | 250 | 60 | 1236 | 0.19 | 2 | 1 | 1 | 1 | 1 | Example |
| 22 | GA | 550 | 20 | 50 | 390 | 300 | 60 | 1211 | 0.12 | 2 | 1 | 1 | 1 | 1 | Example |

| No. | Type | Coating or plating treatment process | | | Cooling-reheating process | | | | Evaluation result | | | | | | | Remarks |
| | | Alloying treatment temp. | Alloying treatment time | Cooling stop temp. | Ms temp. | Reheating temp. | Reheating time | TS | Diffusible hydrogen content | | Appearance evaluation | Adhesion evaluation | Coatability | Hydrogen embrittlement resistance | |
| | - | °C | s | °C | °C | °C | s | MPa | wt. ppm | Rank | Rank | Rank | Rank | Rank | |
| 23 | GA | 550 | 20 | 50 | 390 | 300 | 60 | 1230 | 0.07 | 1 | 1 | 1 | 1 | 1 | Example |
| 24 | GA | 550 | 20 | 50 | 390 | 250 | 60 | 1230 | 0.15 | 2 | 2 | 1 | 2 | 1 | Example |
| 25 | GA | 550 | 20 | 50 | 365 | 300 | 60 | 1152 | 0.07 | 1 | 1 | 1 | 1 | 1 | Example |
| 26 | GA | 550 | 20 | 50 | 334 | 300 | 60 | 1189 | 0.06 | 1 | 1 | 1 | 1 | 1 | Example |

GI: hot-dip galvanizing treatment, GA: hot-dip galvannealing treatment

Table 2 (cont'd)

| No. | Steel sample ID | Oxidizing process | | Reducing process | | | | Soaking process | | | | Rapid heating process | | | Cooling process | | | Remarks |
|---|---|---|---|---|---|---|---|---|---|---|---|---|---|---|---|---|---|---|
| | | Oxygen conc. | Heating temp. | Hydrogen conc. | Holding temp. | Holding time | Dew point | Hydrogen conc. | Soaking temp. | Soaking time | Dew point | Hydrogen conc. | Average heating rate | Maximum arrival temp. | Hydrogen conc. | High temp. range residence time | Cooling stop temp. | |
| | | vol. ppm | °C | vol% | °C | s | °C | vol% | °C | s | °C | vol% | °C/s | °C | vol% | s | °C | |
| 27 | J | 2000 | 700 | 15 | 760 | 25 | -35 | 2.0 | 760 | 80 | -15 | 2.0 | 50 | 830 | 5 | 10 | 500 | Example |
| 28 | K | 2000 | 700 | 15 | 760 | 25 | -35 | 2.0 | 760 | 80 | -15 | 2.0 | 50 | 830 | 5 | 10 | 500 | Example |
| 29 | L | 2000 | 700 | 15 | 760 | 25 | -35 | 2.0 | 760 | 80 | -15 | 2.0 | 50 | 830 | 5 | 10 | 500 | Example |
| 30 | M | 2000 | 700 | 15 | 760 | 25 | -35 | 2.0 | 760 | 80 | -15 | 2.0 | 50 | 830 | 5 | 10 | 500 | Example |
| 31 | N | 2000 | 700 | 15 | 760 | 25 | -35 | 2.0 | 760 | 80 | -15 | 2.0 | 50 | 830 | 5 | 10 | 500 | Example |
| 32 | O | 2000 | 700 | 15 | 760 | 25 | -35 | 2.0 | 760 | 80 | -15 | 2.0 | 50 | 830 | 5 | 10 | 500 | Example |
| 33 | P | 2000 | 700 | 15 | 760 | 25 | -35 | 2.0 | 760 | 80 | -15 | 2.0 | 50 | 830 | 5 | 10 | 500 | Example |
| 34 | Q | 2000 | 700 | 15 | 760 | 25 | -35 | 2.0 | 760 | 80 | -15 | 2.0 | 50 | 820 | 5 | 10 | 500 | Example |
| 35 | R | 2000 | 700 | 15 | 760 | 25 | -35 | 2.0 | 760 | 80 | -15 | 2.0 | 50 | 830 | 5 | 10 | 500 | Example |
| 36 | S | 2000 | 700 | 15 | 760 | 25 | -35 | 2.0 | 760 | 80 | -15 | 2.0 | 50 | 830 | 5 | 10 | 500 | Example |
| 37 | T | 2000 | 700 | 15 | 760 | 25 | -35 | 2.0 | 760 | 80 | -15 | 2.0 | 50 | 830 | 5 | 10 | 500 | Example |
| 38 | U | 2000 | 700 | 15 | 760 | 25 | -35 | 2.0 | 760 | 80 | -15 | 2.0 | 50 | 830 | 5 | 10 | 500 | Example |
| 39 | v | 2000 | 700 | 15 | 760 | 25 | -35 | 2.0 | 760 | 80 | -15 | 2.0 | 50 | 830 | 5 | 10 | 500 | Example |
| 40 | W | 2000 | 700 | 15 | 760 | 25 | -35 | 2.0 | 760 | 80 | -15 | 2.0 | 50 | 830 | 5 | 10 | 500 | Example |
| 41 | X | 2000 | 700 | 15 | 760 | 25 | -35 | 2.0 | 760 | 80 | -15 | 2.0 | 50 | 830 | 5 | 10 | 500 | Example |
| 42 | Y | 2000 | 700 | 15 | 760 | 25 | -35 | 2.0 | 760 | 80 | -15 | 2.0 | 50 | 830 | 5 | 10 | 500 | Example |
| 43 | Z | 2000 | 700 | 15 | 760 | 25 | -35 | 2.0 | 760 | 80 | -15 | 2.0 | 50 | 830 | 5 | 10 | 500 | Example |
| 44 | AA | 2000 | 700 | 15 | 760 | 25 | -35 | 2.0 | 760 | 80 | -15 | 2.0 | 50 | 830 | 5 | 10 | 500 | Example |
| 45 | AB | 2000 | 700 | 15 | 760 | 25 | -35 | 2.0 | 760 | 80 | -15 | 2.0 | 50 | 830 | 5 | 10 | 500 | Example |
| 46 | AC | 2000 | 700 | 15 | 760 | 25 | -35 | 2.0 | 760 | 80 | -15 | 2.0 | 50 | 830 | 5 | 10 | 500 | Example |
| 47 | AD | 2000 | 700 | 15 | 760 | 25 | -35 | 2.0 | 760 | 80 | -15 | 2.0 | 50 | 830 | 5 | 10 | 500 | Example |
| 48 | AE | 2000 | 700 | 15 | 760 | 25 | -35 | 2.0 | 760 | 80 | -15 | 2.0 | 50 | 830 | 5 | 10 | 500 | Example |
| 49 | AF | 2000 | 700 | 15 | 760 | 25 | -35 | 2.0 | 760 | 80 | -15 | 2.0 | 50 | 830 | 5 | 10 | 500 | Example |
| 50 | AG | 2000 | 700 | 15 | 760 | 25 | -35 | 2.0 | 760 | 80 | -15 | 2.0 | 50 | 830 | 5 | 10 | 500 | Example |

(continued)

| No. | Steel sample ID | Oxidizing process | | Reducing process | | | | | Soaking process | | | | Rapid heating process | | | Cooling process | | | Remarks |
| | | Oxygen conc. | Heating temp. | Hydrogen conc. | Holding temp. | Holding time | Dew point | Hydrogen conc. | Soaking temp. | Soaking time | Dew point | Hydrogen conc. | Average heating rate | Maximum arrival temp. | Hydrogen conc. | High temp. range residence time | Cooling stop temp. | | |
| | | vol. ppm | °C | vol% | °C | s | °C | vol% | °C | s | °C | vol% | °C/s | °C | vol% | s | °C | |
| 51 | AH | 2000 | 700 | 15 | 760 | 25 | -35 | 2.0 | 760 | 80 | -15 | 2.0 | 50 | 830 | 5 | 10 | 500 | Example |

GI: hot-dip galvanizing treatment, GA: hot-dip galvannealing treatment

Table 2 (cont'd)

| No. | Type | Coating or plating treatment process | | Cooling-reheating process | | | | Evaluation result | | | | | | | Remarks |
| | | Alloying treatment temp. | Alloying treatment time | Cooling stop temp. | Ms temp. | Reheating temp. | Reheating time | TS | Diffusible hydrogen content | | Appearance evaluation | Adhesion evaluation | Coatability | Hydrogen embrittlement resistance | |
| | - | °C | s | °C | °C | °C | s | MPa | wt. ppm | Rank | Rank | Rank | Rank | Rank | |
| 27 | GA | 550 | 20 | 50 | 309 | 300 | 60 | 1215 | 0.08 | 1 | 1 | 1 | 1 | 1 | Example |
| 28 | GA | 550 | 20 | 50 | 379 | 300 | 60 | 1170 | 0.06 | 1 | 1 | 1 | 1 | 1 | Example |
| 29 | GA | 550 | 20 | 50 | 397 | 300 | 60 | 1113 | 0.05 | 1 | 1 | 1 | 1 | 1 | Example |
| 30 | GA | 550 | 20 | 50 | 340 | 300 | 60 | 1138 | 0.08 | 1 | 1 | 1 | 1 | 1 | Example |
| 31 | GA | 550 | 20 | 50 | 312 | 300 | 60 | 1135 | 0.05 | 1 | 1 | 1 | 1 | 1 | Example |
| 32 | GA | 550 | 20 | 50 | 332 | 300 | 60 | 1143 | 0.04 | 1 | 1 | 1 | 1 | 1 | Example |
| 33 | GA | 550 | 20 | 50 | 353 | 300 | 60 | 1194 | 0.04 | 1 | 1 | 1 | 1 | 1 | Example |
| 34 | GA | 550 | 20 | 50 | 349 | 300 | 60 | 1244 | 0.07 | 1 | 1 | 1 | 1 | 1 | Example |
| 35 | GA | 550 | 20 | 50 | 399 | 300 | 60 | 1134 | 0.04 | 1 | 1 | 1 | 1 | 1 | Example |
| 36 | GA | 550 | 20 | 50 | 361 | 300 | 60 | 1246 | 0.09 | 1 | 1 | 1 | 1 | 1 | Example |
| 37 | GA | 550 | 20 | 50 | 320 | 300 | 60 | 1125 | 0.09 | 1 | 1 | 1 | 1 | 1 | Example |
| 38 | GA | 550 | 20 | 50 | 364 | 300 | 60 | 1247 | 0.05 | 1 | 1 | 1 | 1 | 1 | Example |
| 39 | GA | 550 | 20 | 50 | 401 | 300 | 60 | 1204 | 0.07 | 1 | 1 | 1 | 1 | 1 | Example |
| 40 | GA | 550 | 20 | 50 | 385 | 300 | 60 | 1268 | 0.06 | 1 | 1 | 1 | 1 | 1 | Example |
| 41 | GA | 550 | 20 | 50 | 312 | 300 | 60 | 1200 | 0.04 | 1 | 1 | 1 | 1 | 1 | Example |
| 42 | GA | 550 | 20 | 50 | 368 | 300 | 60 | 1158 | 0.06 | 1 | 1 | 1 | 1 | 1 | Example |
| 43 | GA | 550 | 20 | 50 | 359 | 300 | 60 | 1174 | 0.05 | 1 | 1 | 1 | 1 | 1 | Example |
| 44 | GA | 550 | 20 | 50 | 352 | 300 | 60 | 1185 | 0.07 | 1 | 1 | 1 | 1 | 1 | Example |
| 45 | GA | 550 | 20 | 50 | 393 | 300 | 60 | 1231 | 0.08 | 1 | 1 | 1 | 1 | 1 | Example |
| 46 | GA | 550 | 20 | 50 | 383 | 300 | 60 | 1176 | 0.04 | 1 | 1 | 1 | 1 | 1 | Example |
| 47 | GA | 550 | 20 | 50 | 392 | 300 | 60 | 1143 | 0.09 | 1 | 1 | 1 | 1 | 1 | Example |
| 48 | GA | 550 | 20 | 50 | 343 | 300 | 60 | 1178 | 0.04 | 1 | 1 | 1 | 1 | 1 | Example |

(continued)

| No. | Coating or plating treatment process | | | Cooling-reheating process | | | | TS | Evaluation result | | | | | | Remarks |
|---|---|---|---|---|---|---|---|---|---|---|---|---|---|---|---|
| | Type | Alloying treatment temp. | Alloying treatment time | Cooling stop temp. | Ms temp. | Reheating temp. | Reheating time | | Diffusible hydrogen content | | Appearance evaluation | Adhesion evaluation | Coatability | Hydrogen embrittlement resistance | |
| | - | °C | s | °C | °C | °C | s | MPa | wt. ppm | Rank | Rank | Rank | Rank | Rank | |
| 49 | GA | 550 | 20 | 50 | 377 | 300 | 60 | 1249 | 0.05 | 1 | 1 | 1 | 1 | 1 | Example |
| 50 | GA | 550 | 20 | 50 | 378 | 300 | 60 | 1219 | 0.06 | 1 | 1 | 1 | 1 | 1 | Example |
| 51 | GA | 550 | 20 | 50 | 327 | 300 | 60 | 1148 | 0.06 | 1 | 1 | 1 | 1 | 1 | Example |

GI: hot-dip galvanizing treatment, GA: hot-dip galvannealing treatment

Table 3

| No. | Steel sample ID | Oxidizing process | | Reducing process | | | | Soaking process | | | | Rapid heating process | | | Cooling process | | | Remarks |
|---|---|---|---|---|---|---|---|---|---|---|---|---|---|---|---|---|---|---|
| | | Oxygen conc. | Heating temp. | Hydrogen conc. | Holding temp. | Holding time | Dew point | Hydrogen conc. | Soaking temp. | Soaking time | Dew point | Hydrogen conc. | Average heating rate | Maximum arrival temp. | Hydrogen conc. | High temp. range residence time | Cooling stop temp. | |
| | | vol. ppm | °C | vol% | °C | s | °C | vol% | °C | s | °C | vol% | °C/s | °C | vol% | s | °C | |
| 52 | A | 2000 | 700 | 25 | 760 | 25 | -35 | 8.0 | 880 | 80 | -15 | 8.0 | - | 880 | 5 | 10 | 500 | Comparative Example |
| 53 | A | 2000 | 700 | 15 | 760 | 25 | -35 | 2.0 | 760 | 80 | -15 | 2.0 | 50 | 880 | 25 | 50 | 500 | Comparative Example |
| 54 | A | 2000 | 700 | 32 | 760 | 25 | -35 | 2.0 | 760 | 80 | -15 | 2.0 | 50 | 880 | 5 | 10 | 500 | Comparative Example |
| 55 | A | 2000 | 700 | 15 | 760 | 25 | -35 | 2.0 | 760 | 80 | -15 | 0.1 | 50 | 880 | 5 | 10 | 500 | Comparative Example |
| 56 | A | 2000 | 700 | 15 | 760 | 25 | -35 | 2.0 | 880 | 80 | -15 | 2.0 | - | 880 | 5 | 10 | 500 | Comparative Example |
| 57 | A | 2000 | 700 | 15 | 760 | 25 | -35 | 15.0 | 760 | 80 | -15 | 2.0 | 50 | 880 | 5 | 10 | 500 | Comparative Example |
| 58 | B | 2000 | 500 | 15 | 760 | 25 | -35 | 2.0 | 760 | 80 | -15 | 5.0 | 50 | 850 | 5 | 10 | 500 | Comparative Example |
| 59 | F | 2000 | 700 | 15 | 760 | 25 | -35 | 2.0 | 760 | 80 | -15 | 2.0 | 50 | 880 | 5 | 10 | 500 | Comparative Example |
| 60 | G | 2000 | 700 | 15 | 760 | 25 | -35 | 2.0 | 760 | 80 | -15 | 2.0 | 50 | 880 | 5 | 10 | 500 | Comparative Example |

GI: hot-dip galvanizing treatment, GA: hot-dip galvannealing treatment

EP 4 678 771 A1

Table 3 (cont'd)

| No. | Type | Coating or plating treatment process | | Cooling-reheating process | | | | Evaluation result | | | | | | | Remarks |
| | | Alloying treatment temp. | Alloying treatment time | Cooling stop temp. | Ms temp. | Reheating temp. | Reheating time | TS | Diffusible hydrogen content | | Appearance evaluation | Adhesion evaluation | Coatability | Hydrogen embrittlement resistance | |
| | - | °C | s | °C | °C | °C | s | MPa | wt. ppm | Rank | Rank | Rank | Rank | Rank | |
| 52 | GI | - | - | 25 | 364 | - | - | 1538 | <u>0.35</u> | 4 | 1 | 1 | 1 | <u>3</u> | Comparative Example |
| 53 | GI | - | - | 25 | 364 | - | - | 1526 | <u>0.33</u> | 4 | 1 | 1 | 1 | 3 | Comparative Example |
| 54 | GI | - | - | 25 | 364 | - | - | 1532 | <u>0.31</u> | 4 | 1 | 1 | 1 | <u>3</u> | Comparative Example |
| 55 | GI | - | - | 50 | 364 | - | - | 1589 | 0.14 | 2 | 3 | 3 | 3 | 1 | Comparative Example |
| 56 | GA | *550* | 20 | 50 | 364 | 500 | 60 | 1471 | <u>0.31</u> | <u>4</u> | 2 | <u>3</u> | <u>3</u> | 1 | Comparative Example |
| 57 | GI | - | - | 50 | 364 | - | - | 1587 | <u>0.75</u> | 4 | 1 | 1 | 1 | 1 | Comparative Example |
| 58 | GA | *550* | 20 | 50 | 378 | 200 | 60 | 1249 | 0.09 | 1 | 3 | 3 | 3 | 1 | Comparative Example |
| 59 | GA | 550 | 20 | 50 | 380 | 300 | 60 | 1531 | 0.05 | 1 | <u>3</u> | <u>3</u> | <u>3</u> | 1 | Comparative Example |
| 60 | GA | *550* | 20 | 50 | 322 | 300 | 60 | 1632 | 0.05 | 1 | 3 | 3 | 3 | 1 | Comparative Example |
| GI: hot-dip galvanizing treatment, GA: hot-dip galvannealing treatment | | | | | | | | | | | | | | | |

EP 4 678 771 A1

As indicated in Table 3, for all of the Examples, even when a steel sheet having a chemical composition containing large amounts of easily oxidizable Si and Mn was used as the blank sheet in order to increase strength, it was possible to produce coated or plated steel sheets that achieved both excellent coatability and excellent hydrogen embrittlement resistance.

In contrast, the Comparative Examples failed evaluation for at least one of coatability and hydrogen embrittlement resistance.

**Claims**

1. A method of producing a coated or plated steel sheet, the method comprising:

   an oxidizing process of heating a blank sheet having a chemical composition containing, in mass%, Si: 0.10 % or more and 2.00 % or less, and Mn: 1.00 % or more and 5.00 % or less, under the following conditions:

   atmosphere: oxygen concentration of 1000 volume ppm or more and 30,000 volume ppm or less, and heating temperature: 600 °C or more;

   a reducing process of holding the blank sheet under the following conditions:

   atmosphere: hydrogen concentration of 8 vol% or more and 30 vol% or less, holding temperature: 700 °C or more, and holding time: 20 s or longer;

   a soaking process of holding the blank sheet under the following conditions:

   atmosphere: hydrogen concentration of 0.2 vol% or more and less than 8 vol%, soaking temperature: 700 °C or more and less than 900 °C, and soaking time: 20 s to 300 s;

   a rapid heating process of heating the blank sheet under the following conditions:

   atmosphere: hydrogen concentration of 0.2 vol% or more and 30 vol% or less, average heating rate from the soaking temperature: 10 °C/s or more, and maximum arrival temperature: the soaking temperature + 10 °C or more;

   a cooling process of cooling the blank sheet under the following conditions:

   atmosphere: hydrogen concentration of 0.2 vol% or more and 30 vol% or less, residence time in a temperature range from the maximum arrival temperature in the rapid heating process to the soaking temperature: 20 s or shorter, and cooling stop temperature: 500 °C or less; and a coating or plating treatment process of carrying out a coating or plating treatment on one or both sides of the blank sheet to obtain the coated or plated steel sheet.

2. The method of producing a coated or plated steel sheet according to claim 1, satisfying at least one of the following (1) to (3):

   (1) atmosphere of the soaking process: hydrogen concentration is 0.2 vol% or more and 5 vol% or less,
   (2) atmosphere of the rapid heating process: hydrogen concentration is 0.2 vol% or more and less than 8 vol%, and
   (3) atmosphere in the cooling process: hydrogen concentration is 0.5 vol% or more and 20 vol% or less.

3. The method of producing a coated or plated steel sheet according to claim 1 or 2, wherein the chemical composition further contains, in mass%,

   C: 0.05 % or more and 0.40 % or less,
   P: 0.100 % or less,

S: 0.0200 % or less,
Al: 0.003 % or more and 2.000 % or less, and
N: 0.0100 % or less,
with the balance being Fe and inevitable impurity.

4. The method of producing a coated or plated steel sheet according to claim 3, wherein the chemical composition further contains, in mass%, at least one selected from:

B: 0.0100 % or less,
Ti: 0.200 % or less,
Nb: 0.200 % or less,
Sb: 0.200 % or less,
Sn: 0.200 % or less,
V: 0.100 % or less,
Cu: 1.00 % or less,
Cr: 1.00 % or less,
Ni: 1.00 % or less,
Mo: 1.00 % or less,
Ta: 0.100 % or less,
W: 0.500 % or less,
Zr: 0.020 % or less,
Ca: 0.0200 % or less
Mg: 0.0200 % or less,
Zn: 0.020 % or less,
Co: 0.020 % or less,
Ce: 0.0200 % or less,
Se: 0.0200 % or less,
Te: 0.0200 % or less,
Ge: 0.0200 % or less,
As: 0.0200 % or less,
Sr: 0.0200 % or less,
Cs: 0.0200 % or less,
Hf: 0.0200 % or less,
Pb: 0.0200 % or less,
Bi: 0.0200 % or less, and
REM: 0.0200 % or less.

5. The method of producing a coated or plated steel sheet according to claim 1 or 2, wherein the coating or plating treatment is a hot-dip galvanizing treatment or a hot-dip galvannealing treatment.

6. The method of producing a coated or plated steel sheet according to claim 3, wherein the coating or plating treatment is a hot-dip galvanizing treatment or a hot-dip galvannealing treatment.

7. The method of producing a coated or plated steel sheet according to claim 4, wherein the coating or plating treatment is a hot-dip galvanizing treatment or a hot-dip galvannealing treatment.

8. The method of producing a coated or plated steel sheet according to claim 1 or 2, wherein the coating or plating treatment is a hot-dip galvannealing treatment,

the method further comprising, after the coating or plating treatment process,
a cooling-reheating process of cooling the coated or plated steel sheet under the following condition:
cooling stop temperature: Ms temperature or less
followed by reheating the coated or plated steel sheet under the following conditions:

atmosphere: hydrogen concentration of 0.2 vol% or less,
reheating temperature: 100 °C or more and 450 °C or less, and
reheating time: 5 s or longer.

9. The method of producing a coated or plated steel sheet according to claim 3, wherein the coating or plating treatment is a hot-dip galvannealing treatment,

the method further comprising, after the coating or plating treatment process,
a cooling-reheating process of cooling the coated or plated steel sheet under the following condition:
cooling stop temperature: Ms temperature or less
followed by reheating the coated or plated steel sheet under the following conditions:

atmosphere: hydrogen concentration of 0.2 vol% or less,
reheating temperature: 100 °C or more and 450 °C or less, and
reheating time: 5 s or longer.

10. The method of producing a coated or plated steel sheet according to claim 4, wherein the coating or plating treatment is a hot-dip galvannealing treatment,

the method further comprising, after the coating or plating treatment process,
a cooling-reheating process of cooling the coated or plated steel sheet under the following condition:
cooling stop temperature: Ms temperature or less
followed by reheating the coated or plated steel sheet under the following conditions:

atmosphere: hydrogen concentration of 0.2 vol% or less,
reheating temperature: 100 °C or more and 450 °C or less, and
reheating time: 5 s or longer.

11. The method of producing a coated or plated steel sheet according to claim 8, wherein the cooling stop temperature in the cooling-reheating process is (Ms temperature - 50 °C) or less.

12. The method of producing a coated or plated steel sheet according to claim 9, wherein the cooling stop temperature in the cooling-reheating process is (Ms temperature - 50 °C) or less.

13. The method of producing a coated or plated steel sheet according to claim 10, wherein the cooling stop temperature in the cooling-reheating process is (Ms temperature - 50 °C) or less.

# EP 4 678 771 A1

## INTERNATIONAL SEARCH REPORT

International application No.

**PCT/JP2023/016964**

| A. | CLASSIFICATION OF SUBJECT MATTER |
|---|---|

*C21D 9/46*(2006.01)i; *C21D 9/56*(2006.01)i; *C22C 38/00*(2006.01)i; *C22C 38/06*(2006.01)i; *C22C 38/60*(2006.01)i; *C23C 2/02*(2006.01)i; *C23C 2/06*(2006.01)i; *C23C 2/28*(2006.01)i

FI: C21D9/46 J; C21D9/56 101B; C22C38/00 301T; C22C38/06; C22C38/60; C23C2/02; C23C2/06; C23C2/28

According to International Patent Classification (IPC) or to both national classification and IPC

| B. | FIELDS SEARCHED |
|---|---|

Minimum documentation searched (classification system followed by classification symbols)

C21D9/46-9/48; C21D9/56; C22C38/00-38/60; C23C2/00-2/40

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2021/166350 A1 (JFE STEEL CORP.) 26 August 2021 (2021-08-26) <br> claims | 1-13 |
| A | JP 2012-149307 A (JFE STEEL CORP.) 09 August 2012 (2012-08-09) <br> claims | 1-13 |
| A | JP 2014-525986 A (THYSSENKRUPP STEEL EUROPE AG) 02 October 2014 (2014-10-02) <br> claims | 1-13 |
| A | WO 2014/073520 A1 (NIPPON STEEL & SUMITOMO METAL CORP.) 15 May 2014 (2014-05-15) <br> claims, tables 2-1, 2-2 | 1-13 |
| A | WO 2019/212045 A1 (NIPPON STEEL CORPORATION) 07 November 2019 (2019-11-07) <br> claims | 1-13 |

☐ Further documents are listed in the continuation of Box C.  ☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **08 June 2023** | **20 June 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

35

## INTERNATIONAL SEARCH REPORT
### Information on patent family members

International application No.

**PCT/JP2023/016964**

| Patent document cited in search report | | | Publication date (day/month/year) | Patent family member(s) | | | Publication date (day/month/year) |
|---|---|---|---|---|---|---|---|
| WO | 2021/166350 | A1 | 26 August 2021 | EP | 4108793 | A1 | |
| | | | | claims | | | |
| | | | | CN | 115003847 | A | |
| JP | 2012-149307 | A | 09 August 2012 | (Family: none) | | | |
| JP | 2014-525986 | A | 02 October 2014 | US | 2014/0251505 | A1 | |
| | | | | claims | | | |
| | | | | WO | 2013/007578 | A2 | |
| WO | 2014/073520 | A1 | 15 May 2014 | EP | 2918696 | A1 | |
| | | | | claims, tables 2-1, 2-2 | | | |
| | | | | US | 2015/0275345 | A1 | |
| | | | | US | 2019/0078190 | A1 | |
| | | | | CN | 104769146 | A | |
| WO | 2019/212045 | A1 | 07 November 2019 | US | 2021/0155999 | A1 | |
| | | | | claims | | | |

Form PCT/ISA/210 (patent family annex) (January 2015)

## EP 4 678 771 A1

**Patent documents cited in the description**

- JP 2016053211 A
- JP S54130443 A
- JP 3266008 B
- JP 5811841 B
- JP 2020045568 A